# EUROPEAN PATENT APPLICATION

(11) **EP 4 274 133 A1**
(43) Date of publication of application: **08.11.2023**
(21) Application number: 21912435.1
(22) Date of filing: 04.01.2021
(51) Int. Cl.: H04L 1/18

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Taor, Simon Edward William
(86) International application number: PCT/CN2021/070195
(87) International publication number: WO 2022/141652

(57) **Abstract**

The present disclosure provides a wireless communication method and device. The method includes: transmitting, by a first device, a first Hybrid Automatic Repeat reQuest Acknowledgement (HARQ-ACK) codebook to a second device over a first feedback resource, the first HARQ-ACK codebook being determined according to a first control information format. The first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

## Description

### TECHNICAL FIELD

The embodiments of the present disclosure relate to communication technology, and more particularly, to a wireless communication method and device.

### BACKGROUND

In a high-frequency system, due to a relatively large subcarrier spacing, each time slot used for transmitting a Physical Downlink Shared Channel (PDSCH) occupies a relatively short time length. If the scheme of scheduling PDSCH in each time slot in a low-frequency system continues to be used, terminal devices will be required to detect PDCCH in each time slot, which requires the terminal devices to have high processing capabilities. In order to lower the requirements on the processing capabilities of the terminal devices, a scheduling scheme of scheduling a plurality of physical channels by using one instance of Downlink Control Information (DCI) is introduced. In this case, if a terminal device receives DCI for scheduling a plurality of physical channels, how to determine a HARQ-ACK codebook corresponding to the plurality of physical channels is a problem to be solved.

### SUMMARY

The present disclosure provides a wireless communication method and device. A first device can determine a size of a HARQ-ACK codebook and a position of a scheduled or activated physical channel in the HARQ-ACK codebook according to a configured control information format. Correspondingly, a second device may determine the size of the HARQ-ACK codebook and the position of the scheduled or activated physical channel in the HARQ-ACK codebook according to the configured control information format for the first device, so as to interpret the HARQ-ACK codebook, thereby avoiding the problem of inconsistent understanding of the HARQ-ACK codebook between the transmitter device and the receiver device.

In a first aspect, a wireless communication method is provided. The method includes: transmitting, by a first device, a first Hybrid Automatic Repeat reQuest Acknowledgement (HARQ-ACK) codebook to a second device over a first feedback resource, the first HARQ-ACK codebook being determined according to a first control information format. The first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

In a second aspect, a wireless communication method is provided. The method includes: determining, by a first device, a first feedback resource corresponding to a first candidate physical channel reception opportunity group;
determining, by the first device, that in the first candidate physical channel reception opportunity group, only Hybrid Automatic Repeat reQuest Acknowledgement (HARQ-ACK) information corresponding to one physical channel needs to be fed back, or only HARQ-ACK information corresponding to semi-persistent scheduling physical channel receptions needs to be fed back, or only HARQ-ACK information corresponding to control information for releasing one or more semi-persistent scheduling physical channel configurations needs to be fed back;
feeding, by the first device in response to determining that only the HARQ-ACK information corresponding to one physical channel needs to be fed back, back only the HARQ-ACK information corresponding to the physical channel over the first feedback resource; or
feeding, by the first device in response to determining only the HARQ-ACK information corresponding to the semi-persistent scheduling physical channel receptions needs to be fed back, back only the HARQ-ACK information corresponding to the semi-persistent scheduling physical channel receptions over the first feedback resource; or
feeding, by the first device in response to determining that only the HARQ-ACK information corresponding to the control information for releasing the one or more semi-persistent scheduling physical channel configurations needs to be fed back, back only the HARQ-ACK information corresponding to the control information over the first feedback resource.

In a third aspect, a wireless communication method is provided. The method includes: receiving, by a second device, a first Hybrid Automatic Repeat reQuest Acknowledgement (HARQ-ACK) codebook transmitted by a first device over a first feedback resource, the first HARQ-ACK codebook being determined according to a first control information format. The first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

In a fourth aspect, a wireless communication method is provided. The method includes: determining, by a second device, a first feedback resource corresponding to a first candidate physical channel reception opportunity group, the first candidate physical channel access opportunity group including only one physical channel, or only semi-persistent scheduling physical channel receptions, or only control information for releasing one or more semi-persistent scheduling physical channel configurations; and
receiving, by the second device, feedback information transmitted by a first device over the first feedback resource, the feedback information including only Hybrid Automatic Repeat reQuest Acknowledgement (HARQ-ACK) information corresponding to the physical channel, or only HARQ-ACK information corresponding to the semi-persistent scheduling physical channel receptions, or only HARQ-ACK information corresponding to the control information.

In a fifth aspect, a wireless communication device is provided. The wireless communication device is configured to perform the method according to the above first aspect or any implementation thereof.

In particular, the device includes one or more functional modules configured to perform the method according to the above first or second aspect or any implementation thereof.

In a sixth aspect, a wireless communication device is provided. The wireless communication device is configured to perform the method according to the above second aspect or any implementation thereof.

In particular, the device includes one or more functional modules configured to perform the method according to the above third or fourth aspect or any implementation thereof.

In a seventh aspect, a communication device is provided. The terminal device includes a processor and a memory. The memory has a computer program stored thereon, and the processor is configured to invoke and execute the computer program stored in the memory to perform the method according to the above first or second aspect or any implementation thereof.

In an eighth aspect, a communication device is provided. The communication device includes a processor and a memory. The memory has a computer program stored thereon, and the processor is configured to invoke and execute the computer program stored in the memory to perform the method according to the above third or fourth aspect or any implementation thereof.

In a ninth aspect, a chip is provided. The chip is configured to perform the method according to any of the above first to fourth aspects or any implementation thereof.

In particular, the chip includes a processor configured to invoke and execute a computer program from a memory, to cause a device provided with the apparatus to perform the method according to any of the above first to fourth aspects or any implementation thereof.

In a tenth aspect, a computer-readable storage medium is provided. The computer-readable storage medium stores a computer program that cause a computer to perform the method according to any of the above first to fourth aspects or any implementation thereof.

In an eleventh aspect, a computer program product is provided. The computer program product includes computer program instructions that cause a computer to perform the method according to any of the above first to fourth aspects or any implementation thereof.

In a twelfth aspect, a computer program is provided. The computer program, when executed on a computer, causes the computer to perform the method according to any of the above first to fourth aspects or any implementation thereof.

With the above technical solutions, the first device can determine the size of the HARQ-ACK codebook and the position of the scheduled or activated physical channel in the HARQ-ACK codebook according to the configured control information format. Correspondingly, the second device can determine the size of the HARQ-ACK codebook and the position of the scheduled or activated physical channel in the HARQ-ACK codebook according to the configured control information format for the first device, so as to interpret the HARQ-ACK codebook, thereby avoiding the problem of inconsistent understanding of the HARQ-ACK codebook between the transmitter device and the receiver device.

### BRIEF DESCRIPTION OF DRAWINGS

FIG. 1 is a schematic diagram showing a communication system architecture according to an embodiment of the present disclosure.
FIG. 2 is a schematic diagram showing an example of Type-1 HARQ-ACK codebook feedback.
FIG. 3 is a schematic diagram showing one DCI scheduling multiple PDSCH transmissions.
FIG. 4 is a schematic interaction diagram illustrating a wireless communication method according to an embodiment of the present disclosure.
FIG. 5 is a schematic diagram showing an example of HARQ-ACK codebook feedback determined according to the method embodiment of the present disclosure.
FIG. 6 is a schematic interaction diagram illustrating another wireless communication method according to an embodiment of the present disclosure.
FIGS. 7 to 10 are schematic block diagrams of wireless communication devices according to embodiments of the present disclosure.
FIG. 11 is a schematic block diagram of a communication device according to an embodiment of the present disclosure.
FIG. 12 is a schematic block diagram of a chip according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

Optionally, the embodiments of the present disclosure may be applied to a Non-Terrestrial Network (NTN) system or a Terrestrial Network (TN) system.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home. The terminal device in the embodiments of the present disclosure may also be referred to as terminal, User Equipment (UE), access terminal device, vehicle-mounted terminal, industrial control terminal, UE unit, UE station, mobile station, mobile, remote station, remote terminal device, mobile device, UE terminal device, wireless communication device, UE agent, or UE device, etc. The terminal device can also be fixed or mobile.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

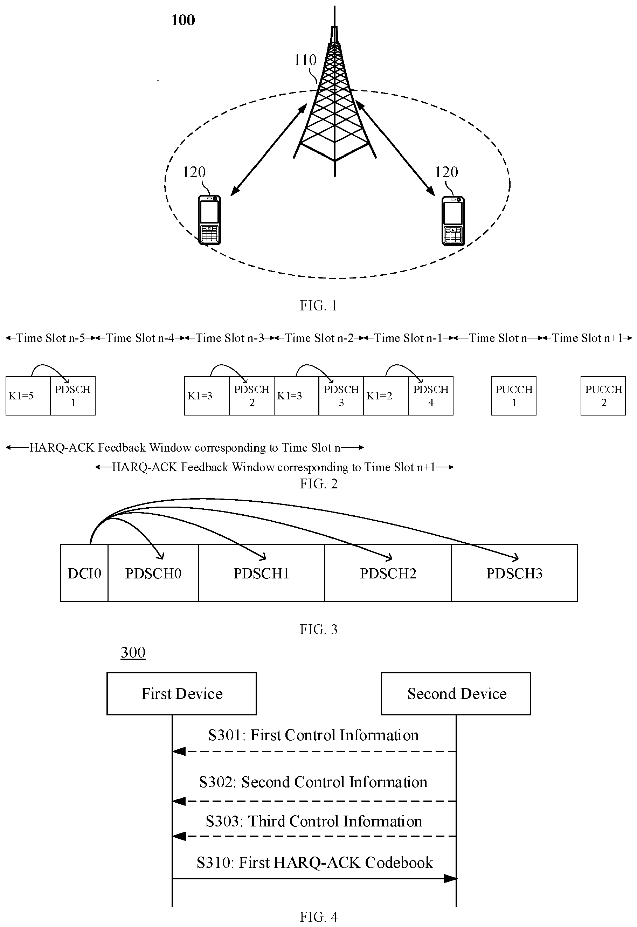

Exemplarily, FIG. 1A is a schematic diagram showing an architecture of a communication system according to an embodiment of the present disclosure. A shown in FIG. 1A, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1A exemplarily shows one network device and two terminal devices. Optionally, the communication system 100 may include multiple network devices, and the coverage of each network device may include other numbers of terminal devices. The embodiment of the present disclosure is not limited to this.

Exemplarily, FIG. 1B is a schematic diagram showing an architecture of another communication system according to an embodiment of the present disclosure. Referring to FIG. 1B, a terminal device 1101 and a satellite 1102 are included, and wireless communication can be performed between the terminal device 1101 and the satellite 1102. The network formed between the terminal device 1101 and the satellite 1102 may also be referred to as an NTN. In the architecture of the communication system shown in FIG. 1B, the satellite 1102 may function as a base station, and the terminal device 1101 and the satellite 1102 may communicate with each other directly. In this system architecture, the satellite 1102 can be referred to as a network device. Optionally, the communication system may include multiple network devices 1102, and the coverage of each network device 1102 may include a different number of terminal devices, and the embodiment of the present disclosure is not limited to this.

Exemplarily, FIG. 1C is a schematic diagram showing an architecture of yet another communication system according to an embodiment of the present disclosure. Referring to FIG. 1C, a terminal device 1201, a satellite 1202, and a base station 1203 are included, wireless communication can be performed between the terminal device 1201 and the satellite 1202, and communication can be performed between the satellite 1202 and the base station 1203. The network formed among the terminal device 1201, the satellite 1202, and the base station 1203 may also be referred to as an NTN. In the architecture of the communication system shown in FIG. 1C, the satellite 1202 may not have the function of a base station, and the communication between the terminal device 1201 and the base station 1203 needs to be relayed via the satellite 1202. In this system architecture, the base station 1203 may be referred to as a network device. Optionally, the communication system may include multiple network devices 1203, and the coverage of each network device 1203 may include a different number of terminal devices, and the embodiment of the present disclosure is not limited to this.

It should be noted that FIG. 1A to FIG. 1C are only illustrations of systems where the present disclosure can be applied. Of course, the methods shown in the embodiments of the present disclosure can also be applied to other systems, e.g., 5G communication systems, LTE communication systems, etc., and the embodiment of the present disclosure is not limited to this.

Optionally, the wireless communication system shown in FIGS. 1A-1C may also include other network entities such as a Mobility Management Entity (MME) or an Access and Mobility Management Function (AMF). The embodiment of the present disclosure is not limited to this.

It can be appreciated that, in the embodiments of the present disclosure, a device having a communication function in a network/system may be referred to as a communication device. Taking the communication system 100 shown in FIG. 1A as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

Optionally, indication information in the embodiments of the present disclosure may include physical layer signaling such as one of Downlink Control Information (DCI), Radio Resource Control (RRC) signaling, and Media Access Control Control Element (MAC CE).

Optionally, high-level parameters or high-level signaling in the embodiments of the present disclosure may include at least one of system message, Radio Resource Control (RRC) signaling, or Media Access Control Control Element (MAC CE).

To facilitate better understanding of the embodiments of the present disclosure, the related technologies of the present disclosure will be described first.

The NR system currently mainly considers two frequency bands, Frequency Range 1 (FR1) and Frequency Range (FR2). As an example, the frequency domain ranges included in FR1 and FR2 are shown in Table 1.

**Table 1**

| Frequency Band Definition | Corresponding Frequency Band Range |
|---|---|
| FR1 | 410 MHz - 7.125 GHz |
| FR2 | 24.25 GHz - 52.6 GHz |

With the evolution of the NR system, researches on technologies in new frequency bands such as high-frequency have also begun. The frequency domain range included in the new frequency band is shown in Table 2. For the convenience of description, it is represented as FRX in the present disclosure. It should be understood that the name of the frequency band should not constitute any limitation. For example, FRX may be FR3.

**Table 2: New Frequency Band Range**

| Frequency Band Definition | Corresponding Frequency Band Range |
|---|---|
| FRX | 52.6 GHz - 71 GHz |

The FRX frequency band includes a licensed spectrum and an unlicensed spectrum. In other words, the FRX frequency band includes a non-shared spectrum and a shared spectrum.

The unlicensed spectrum is a spectrum allocated by the country and region that can be used for radio device communication. This spectrum is usually considered a shared spectrum, that is, communication devices in different communication systems can use the spectrum as long as they meet regulatory requirements set by the country or region on the spectrum, without the need to apply to the government for exclusive spectrum authorization.

In order to allow various communication systems that use the unlicensed spectrum for wireless communication to coexist friendly on this spectrum, some countries or regions have stipulated regulatory requirements that must be met when using the unlicensed spectrum. For example, communication devices shall follow the principle of "Listen Before Talk (LBT)", that is, before the communication device can transmit a signal on a channel of the unlicensed spectrum, it needs to perform channel sensing first, and only when the channel sensing result indicates that the channel is idle, the communication device can transmit the signal. The channel sensing result of the communication device on the channel of the unlicensed frequency spectrum shows that the channel is busy, and the communication device cannot transmit the signal. In another example, in order to ensure fairness, in one transmission, the duration of signal transmission by the communication device using the channel of the unlicensed spectrum cannot exceed a certain period of time. In another example, in order to prevent the power of the signal transmitted on the channel of the unlicensed spectrum from being too high and affecting the transmission of other important signals on the channel, the communication device shall not exceed a maximum power spectral density limit when using the channel of the unlicensed spectrum for signal transmission.

The subcarrier spacing considered in the FRX frequency band may be greater than the subcarrier spacing in FR2. The current candidate subcarrier spacing includes at least one of: 240kHz, 480kHz, or 960kHz. As an example, the corresponding numerologies for these candidate subcarrier spacings are shown in Table 3 below.

**Table 3: Numerologies Corresponding To Candidate Subcarrier Spacings**

| Subcarrier Spacing | Symbol Length | NCP Length | ECP Length | Symbol Length With NCP | Slot Length |
|---|---|---|---|---|---|
| 240kHz | 4.**16µs** | 0.**292µs** | 1.**04µs** | 4.452**µs** | 62.5**µs** |
| 480kHz | 2.08**µs** | 0.146**µs** | 0.52**µs** | 2.226**µs** | 31.25**µs** |
| 960kHz | 1.04**µs** | 0.073**µs** | 0.26**µs** | 1.113**µs** | 15.625**µs** |

### Semi-static Codebook Mechanism in NR System

For a terminal device with a downlink service, a network device may schedule transmission of a Physical Downlink Shared Channel (PDSCH) for the terminal device via downlink grant DCI. Here, the downlink grant DCI includes indication information of a Physical Uplink Control Channel (PUCCH) resource, and after receiving the PDSCH, the terminal device will feed back a decoding result of the PDSCH, either Acknowledgment (ACK) or Negative Acknowledgment (NACK) information, to the network device over the PUCCH resource. Here, the NR system supports dynamic determination of HARQ feedback timing. The network device schedules the terminal device to receive the PDSCH via DCI, which includes indication information of the PUCCH resource for transmitting the HARQ-ACK corresponding to the PDSCH.

Specifically, the indication information may include:
- a PUCCH resource indicator used to determine the PUCCH resource; and
- a Hybrid Automatic Repeat reQuest (HARQ) feedback timing indicator (PDSCH-to-HARQ_feedback timing indicator) used to dynamically determine a time domain position of a HARQ feedback resource, such as a time slot of the HARQ feedback resource, usually represented by K1 .

The HARQ feedback timing indication information is used to indicate a value in a HARQ feedback timing set. Here, the HARQ feedback timing set may be predetermined, or configured by the network device, and the HARQ feedback timing set may include at least one K1 value.

If only one K1 value is included in the HARQ feedback timing set, the HARQ feedback timing indication may not be included in the DCI, and the time domain position of the HARQ feedback resource may be determined according to the K1 value in the HARQ feedback timing set.

As an example, the HARQ feedback timing set may be predetermined, and the predetermined values may be {1, 2, 3, 4, 5, 6, 7, 8}. The HARQ feedback timing indication information may include 3 bits, and the 3-bit indication information may be mapped to all of the 8 values in one-to-one correspondence. Specifically, when the HARQ feedback timing indication information is 000, it means K1=1; when the HARQ feedback timing indication information is 001, it means K1=2, and so on. Optionally, in this case, the DCI format corresponding to the DCI is a fallback DCI format such as DCI format 1_0.

As another example, the HARQ feedback timing set configured by the network device may include 4 values, and the HARQ feedback timing indication information may include 2 bits. When the HARQ feedback timing indication information is 00, it indicates the first value in the HARQ feedback timing set; when the HARQ feedback timing indication information is 01, it indicates the second value in the HARQ feedback timing set, and so on. Here, if an invalid K1 is included in the HARQ feedback timing set (for example, the corresponding K1 value is -1), when the HARQ feedback timing indication information indicates the invalid K1, it means that the time slot where the PUCCH resource is located is temporarily not determined. Optionally, the HARQ feedback timing set may be configured by the network device, and the DCI format corresponding to the DCI may be a non-fallback DCI format such as DCI format 1_1 or DCI format 1_2. The number of bits included in the HARQ feedback timing indication information in the DCI may be determined according to the number of values included in the HARQ feedback timing set.

The HARQ-ACK feedback performed by the terminal device includes a semi-static codebook feedback, such as Type-1 HARQ-ACK codebook feedback or Type-3 HARQ-ACK codebook feedback, and a dynamic codebook feedback, such as Type-2 or enhanced Type-2 (eType-2) HARQ-ACK codebook feedback.

If the terminal device is configured with Type-1 HARQ-ACK codebook feedback, the Type-1 HARQ-ACK codebook includes HARQ-ACK information corresponding to candidate PDSCH reception opportunities within a HARQ-ACK feedback window. The candidate PDSCH reception opportunities within the HARQ-ACK feedback window can also be regarded as a candidate PDSCH reception opportunity group.

In Type-1 HARQ-ACK codebook feedback, for a PDSCH without repeated transmission, if the terminal device receives the PDSCH in time slot n, the terminal device should feed back the HARQ-ACK information corresponding to the PDSCH in time slot n+k. For the PDSCH with the number, R, of repeated transmissions, if the terminal device receives the PDSCH in time slots n-R+1 to n, the terminal device should feed back the HARQ-ACK corresponding to the PDSCH information in time slot n+k. If the terminal device receives DCI for releasing a Semi-Persistent Scheduling (SPS) PDSCH configuration in time slot n, the terminal device should feed back the ACK information corresponding to the DCI in time slot n+k. Here, for the PDSCH repeatedly transmitted in multiple time slots, the time slot n+k is determined based on the last one of the multiple time slots as a reference. The time slot n+k can be regarded as a feedback time slot, and k is determined according to the K1 value in the HARQ feedback timing set. If the terminal device needs to feed back the HARQ-ACK information corresponding to the PDSCH in a feedback time slot other than the time slot n+k, the HARQ-ACK information corresponding to the PDSCH is set as NACK information.

One feedback time slot corresponds to a candidate PDSCH reception opportunity group included in one HARQ-ACK feedback window. The candidate PDSCH reception opportunity group is determined according to the K1 value in the HARQ feedback timing set and a Time Domain Resource Assignment (TDRA) table. If the terminal device receives scheduling of at least part of PDSCHs (including scheduled PDSCHs and/or SPS PDSCHs) in a candidate PDSCH reception opportunity group, and the feedback time slot corresponding to the at least part of the PDSCHs is the feedback time slot, then the HARQ-ACK codebook transmitted in the feedback time slot includes the HAQR-ACK information corresponding to the at least part of the PDSCHs, e.g., the corresponding HAQR-ACK information is fed back at the position corresponding to the at least part of the PDSCHs in the Type-1 HARQ-ACK codebook transmitted in the feedback time slot. For an unscheduled candidate PDSCH reception opportunity or for a scheduled candidate PDSCH reception opportunity with a PDSCH for which no feedback in the feedback time slot is indicated, the corresponding position in the Type-1 HARQ-ACK codebook transmitted in the feedback time slot is set to NACK information.

FIG. 2 shows an example of Type-1 HARQ-ACK codebook feedback. Assuming that the HARQ feedback timing set configured by the network device includes 4 values, {2, 3, 4, 5}, the HARQ-ACK feedback window corresponding to the feedback time slot n includes time slot n-5, time slot n-4, time slot n-3, and time slot n-2. Assuming that the terminal device does not indicate the capability to receive multiple unicast PDSCHs in one time slot, one downlink time slot corresponds to one candidate PDSCH reception opportunity.

As shown in FIG. 2, if K1 in the DCI received by the terminal device in time slot n-5 indicates 5 and the DCI schedules PDSCH1; K1 in the DCI received in time slot n-3 indicates 3 and the DCI schedules PDSCH2; K1 in the DCI received in time slot n-2 indicates 3 and the DCI schedules PDSCH3; K1 in the DCI received in time slot n-1 indicates 2 and the DCI schedules PDSCH4, then the terminal device feeds back the decoding results of PDSCH1 and PDSCH2 in time slot n, and the decoding results of PDSCH3 and PDSCH4 in time slot n+1. In addition, the feedback position corresponding to PDSCH3 in time slot n is set to NACK, and the feedback position corresponding to PDSCH2 in time slot n+1 is set to NACK.

In the high-frequency system, due to a relatively large subcarrier spacing, each time slot occupies a relatively short time length. If the scheme of scheduling PDSCH in each time slot in a low-frequency system continues to be used, terminal devices will be required to detect PDCCH in each time slot, which requires the terminal devices to have high processing capabilities. In order to lower the requirements on the processing capabilities of the terminal devices, a scheduling scheme of scheduling a plurality of physical channels by using one instance of DCI is introduced.

Taking downlink transmission as an example, the network device can use one instance of DCI to schedule transmission of at least two physical channels such as PDSCHs, or use one instance of DCI to activate at least two downlink resources for transmission of at least two physical channels (here, the at least two downlink resources may belong to an SPS resource configuration, or belong to different SPS resource configurations). The at least two physical channels may include a first physical channel and a second physical channel. The first physical channel and the second physical channel may be used to transmit different Transport Blocks (TBs).

As shown in FIG. 3, the network device can use DCI0 to schedule transmission of 4 PDSCHs, including PDSCH0, PDSCH1, PDSCH2 and PDSCH3. PDSCH0, PDSCH1, PDSCH2 and PDSCH3 are used to transmit different TBs respectively.

In the high-frequency system, if the scheduling scheme of scheduling a plurality of physical channels by using one instance of DCI is introduced, and the plurality of physical channels are used to transmit different TBs, when the terminal device is configured with a semi-static codebook, if the terminal device receives DCI scheduling a plurality of physical channels, how to determine a HARQ-ACK codebook corresponding to the plurality of physical channels is a problem to be solved.

In order to facilitate understanding of the technical solutions of the embodiments of the present disclosure, the technical solutions of the present disclosure will be described in detail below with reference to specific examples. The above related technologies as optional solutions may be arbitrarily combined with the technical solutions of the embodiments of the present disclosure, and all of these combinations are to be encompassed by the scope of the embodiments of the present disclosure. The embodiments of the present disclosure include at least part of the following content.

FIG. 4 is a schematic flowchart illustrating a wireless communication method 300 according to an embodiment of the present disclosure. As shown in FIG. 4, the method 300 includes the following content.

At S310, a first device transmits a first HARQ-ACK codebook to a second device over a first feedback resource, the first HARQ-ACK codebook being determined according to a first control information format.

The first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

In some embodiments of the present disclosure, the maximum number of physical channels allowable to be scheduled by the first control information format is M, or the maximum number of time slots occupied by physical channels allowable to be scheduled by the first control information format is M, where M is a positive integer greater than or equal to 2. With the technical solution of the present disclosure, it is possible to ensure that the downlink transmission of the terminal device can be scheduled in each time slot even if the terminal device does not monitor the PDCCH in every time slot, which improves the way of PDSCH scheduling, thereby improving system performance. Especially for the high-frequency system, it can reduce the requirements on the capability for terminal device to monitor the PDCCH.

In other embodiments of the present disclosure, the maximum number of physical channels allowable to be activated by the first control information format is M, or the maximum number of time slots occupied by physical channels allowable to be activated by the first control information format is M, where M is a positive integer greater than or equal to 2.

It should be understood that the maximum number of physical channel transmissions allowable to be scheduled by the first control information format and the maximum number of physical channels allowable to be activated by the first control information format may be same or different.

Optionally, the physical channel may include a downlink physical channel, such as PDSCH.

Optionally, the first device may include a terminal device, and the second device may include a network device.

Optionally, the first control information format may include a DCI format.

In some embodiments, the DCI format may include DCI format 1_1 and/or DCI format 1_2.

In some other embodiments, the DCI format may include other DCI formats that can schedule a plurality of PDSCHs by using one instance of DCI, e.g., a new DCI format such as DCI format 1_x.

Optionally, the physical channel may include a sidelink physical channel, for example, Physical Sidelink Shared Channel (PSSCH).

Optionally, the first device may include a first terminal device, and the second device may include a second terminal device.

Optionally, the first control information format may include a sidelink control information format.

Optionally, the physical channel may include an uplink physical channel, for example, Physical Uplink Shared Channel (PUSCH).

Optionally, the first device may include a network device, and the second device may include a terminal device.

Optionally, the first control information format may include an Uplink Control Information (UCI) format.

Optionally, the first feedback resource may include an uplink resource. For example, the first feedback resource may include a PUCCH resource or a Physical Uplink Shared Channel (PUSCH) resource.

Optionally, the first feedback resource may include a sidelink resource. For example, the first feedback resource may include a Physical Sidelink Feedback Channel (PSFCH) resource.

Optionally, in some embodiments of the present disclosure, the method 300 may further include:

At S301, the first device receives first control information transmitted by the second device. The first control information is used to schedule or activate transmission of S physical channels, where S is greater than or equal to 1 and smaller than or equal to M, and the first HARQ-ACK codebook includes HARQ-ACK information corresponding to at least one of the S physical channels.

Optionally, S may be a positive integer.

Optionally, in some embodiments, the first control information format may correspond to the first control information format.

Optionally, in some other embodiments, the first control information may correspond to a format other than the first control information format. For example, the first control information corresponds to a second control information format, and the maximum number of physical channels allowable to be scheduled or activated by the second control information format may be 1.

Optionally, when S is greater than or equal to 2, different ones of the S physical channels may be used to transmit different Transport Blocks (TBs).

Optionally, in some embodiments, the terminal device may be configured with Type-1 HARQ-ACK codebook feedback. That is, the first device may determine the first HARQ-ACK codebook according to the first control information format when Type-1 HARQ-ACK codebook feedback is configured.

Optionally, the at least one physical channel may include all of the S physical channels, or may include at least one physical channel satisfying a specific condition in the S physical channels. The specific condition will be described in the examples below.

Optionally, the first feedback resource may be a feedback resource in a feedback time slot, and the feedback time slot may be determined according to a time slot corresponding to any of the S physical channels.

As Example 1, the feedback time slot may be determined according to a time slot corresponding to the last one of the S physical channels.

As Example 2, the feedback time slot may be determined according to a time slot corresponding to the first one of the S physical channels.

That is, the feedback time slot may use the time slot corresponding to the last one of the S physical channels as a reference, or use the time slot corresponding to the first one of the S physical channels as a reference.

For Example 1, if the last one of the S physical channels is in time slot n, the feedback time slot may be time slot n+k, where k is determined according to the K1 value in the HARQ feedback timing set. For example, the k value may be the K1 value configured in the HARQ feedback timing set or the K1 value indicated by the HARQ feedback timing indication information in the first control information.

Optionally, for Example 1, the first device may feed back the HARQ-ACK information corresponding to the S physical channels in time slot n+k.

For example, if a terminal device receives S PDSCHs scheduled by one instance of DCI in time slots n-S+1 to n, the terminal device should feed back the HARQ-ACK information corresponding to the S PDSCHs in time slot n+k.

For Example 2, if the first one of the S physical channels is in time slot n, the feedback time slot may be time slot n+k, where k is determined according to the K1 value in the HARQ feedback timing set. For example, the k value is the K1 value configured in the HARQ feedback timing set or the K1 value indicated by the HARQ feedback timing indication information in the first control information.

Optionally, for Example 2, the first device may feed back the HARQ-ACK information corresponding to at least one of the S physical channels in time slot n+k.

For example, if a terminal device receives S PDSCHs scheduled by one instance of DCI in time slots n to n+S-1, the terminal device should feed back the HARQ-ACK information corresponding to PDSCHs that satisfy the processing timing among the S PDSCHs in time slot n+k.

Optionally, the at least one physical channel may be a physical channel satisfying a processing timing among the S physical channels.

Optionally, in some embodiments, the physical channel satisfying the processing timing may include at least one of:
a time interval between the physical channel and the first feedback resource satisfying the processing timing;
a time interval between an end position of the physical channel and a start position of the first feedback resource satisfying the processing timing; or
a time interval between the end position of the physical channel and the start position of the first feedback resource being greater than or equal to a specific value.

Optionally, the specific value may be predefined, or configured by the network device, e.g., via high-layer parameter configuration.

Optionally, the processing timing may include processing time for the first device to process the physical channel, for example, time required for decoding the physical channel and generating the HARQ-ACK information corresponding to the physical channel.

Optionally, if the first device needs to feed back the HARQ-ACK information corresponding to at least one of the S physical channels scheduled by the first control information in a feedback time slot other than time slot n+k, the HARQ-ACK information corresponding to the at least one physical channel may be set as NACK information.

Optionally, in some embodiments of the present disclosure, a size of the first HARQ-ACK codebook may be determined according to M. For example, the first HARQ-ACK codebook may be determined according to a number of candidate physical channel reception opportunities included in the first candidate physical channel reception opportunity group, and the number of candidate physical channel reception opportunities included in the first candidate physical channel reception opportunity group may be determined according to M.

Optionally, in some embodiments of the present disclosure, the first HARQ-ACK codebook corresponds to a first candidate physical channel reception opportunity group, and the first candidate physical channel reception opportunity group corresponds to at least one target time slot.

As an example, the physical channel may include a PDSCH, and the first candidate physical channel reception opportunity group may include a first candidate PDSCH reception opportunity group.

As another example, the physical channel may include a PSSCH, and the first candidate physical channel reception opportunity group may include a first candidate PSSCH reception opportunity group.

Optionally, in some embodiments of the present disclosure, the first candidate physical channel reception opportunity group may be determined according to at least one of:

M, S, K1 value in the HARQ feedback timing set, or a TDRA table.

As an example, the first candidate physical channel reception opportunity group may be determined according to M and/or S.

As another example, the first candidate physical channel reception opportunity group may be determined according to the K1 value in the HARQ feedback timing set and the TDRA table, and the TDRA table is also used to determine M value and/or S value.

As yet another example, the first candidate physical channel reception opportunity group may be determined according to at least one of K1 value in the HARQ feedback timing set, M value or S.

Optionally, in some embodiments of the present disclosure, a target time slot corresponding to the first candidate physical channel reception opportunity group may be determined according to K1 in the HARQ feedback timing set and/or M.

As an example, if the physical channel is a PDSCH, the target time slot may be a time slot including downlink symbols. In this case, the downlink time slot corresponding to the first candidate PDSCH reception opportunity group may be determined according to K1 in the HARQ feedback timing set and/or M.

As yet another example, if the physical channel is a PSSCH, the target time slot may be a time slot including sidelink symbols. In this case, the sidelink time slot corresponding to the first candidate PSSCH reception opportunity group may be determined according to K1 in the HARQ feedback timing set and/or M.

In some embodiments of the present disclosure, the target time slot corresponding to the first candidate physical channel reception opportunity group may include a union set of target time slots determined according to K1 and M.

Optionally, assuming that the K1 values included in the HARQ feedback timing set are {K11, K12, K13,..., K1p}, the HARQ-ACK feedback window corresponding to the feedback time slot n, or in other words, the target time slots corresponding to time slot n, includes a union set of time slot n-K11-M+1 to time slot n-K11, time slot n-K12-M+1 to time slot n-K12, time slot n-K13-M+1 to time slot n-K13 , ..., time slot n-K1p-M+1 to time slot n-K1p.

As an example, assuming that the K1 values included in the HARQ feedback timing set are {2, 4} and the value of M is 8, the target time slots corresponding to the feedback time slot n include a union set of time slot n-9 to time slot n-2 and time slot n-11 to time slot n-4. That is, the downlink time slots corresponding to the feedback time slot n include time slot n-11, time slot n-10, time slot n-9, time slot n-8, time slot n-7, time slot n-6, time slot n-5, time slot n-4, time slot n-3, and time slot n-2.

Optionally, assuming that the K1 values included in the HARQ feedback timing set are {K11, K12, K13, ..., K1p}, the HARQ-ACK feedback window corresponding to the feedback time slot n, or in other words, the target time slots corresponding to time slot n, includes a union set of time slot n-K11 to time slot n-K11+M-1, time slot n-K12 to time slot n-K12+M-1, time slot n-K13 to time slot n-K13+M-1 , ..., time slot n-K1p to time slot n-K1p+M-1.

Optionally, in some cases, the K1 value(s) included in the HARQ feedback timing set may be greater than or equal to M.

As an example, assuming that the K1 values included in the HARQ feedback timing set are {12, 13} and the value of M is 8, the downlink time slots corresponding to the feedback time slot n include a union set of time slot n-12 to time slot n-5 and time slot n-13 to time slot n-6. That is, the target time slots corresponding to the feedback time slot n include time slot n-13, time slot n-12, time slot n-11, time slot n-10, time slot n-9, time slot n-8, time slot n-7, time slot n-6, and time slot n-5.

Optionally, in some other cases, only one K1 value may be included in the HARQ feedback timing set. Optionally, when only one K1 value is included in the HARQ feedback timing set, the K1 value may be configured or predefined by the network device via a high-layer parameter.

Optionally, the K1 value(s) included in the HARQ feedback timing set may be associated with M. For example, the difference between two adjacent K1 values in the HARQ feedback timing set may be greater than or equal to M. As an example, M=4, and the HARQ feedback timing set includes two values {5, 9}, where 9-5=4.

Optionally, the number of K1 values included in the HARQ feedback timing set may be associated with M. For example, when M is greater than or equal to a predetermined value, only one K1 value is included in the HARQ feedback timing set.

For example, when M is greater than or equal to 4, only one K1 value is configured in the HARQ feedback timing set.

As an example, if the value of M is 8, and the K1 value included in the HARQ feedback timing set is 4, then the target time slots corresponding to the feedback time slot n include time slot n-11 to time slot n-4. That is, the target time slots corresponding to the feedback time slot n include time slot n-11, time slot n-10, time slot n-9, time slot n-8, time slot n-7, time slot n-6, time slot n-5, and time slot n-4.

Optionally, in some embodiments of the present disclosure, a number of candidate physical channel reception opportunities corresponding to one target time slot may be 1. Alternatively, the first device does not expect to receive two physical channels in one target time slot, or the first device does not expect to receive two unicast physical channels in one target time slot.

Optionally, if the terminal device does not indicate the capability to receive multiple unicast PDSCHs within one time slot, one target time slot may correspond to one candidate PDSCH reception opportunity.

Optionally, in other embodiments of the present disclosure, the number of candidate physical channel reception opportunities corresponding to the target time slot can be determined according to at least one of a TDRA table, the M value, or the S value, or in other words, the number of candidate physical channel reception opportunities corresponding to one target time slot can be determined according to at least one of the TDRA table, the M value or the S value.

Optionally, in some embodiments, the number of candidate physical channel reception opportunities corresponding to one target time slot may be determined according to an SLIV value in a TDRA table. As an example, the TDRA table may include N rows, each row corresponding to at least one SLIV value.

As an example, the number of candidate physical channel reception opportunities corresponding to the one target time slot may be determined according to an SLIV value corresponding to valid scheduling in the TDRA table.

It should be understood that the present disclosure is not limited any specific scheme of determining whether an SLIV value in the TDRA table corresponds to valid scheduling.

When the physical channel is a PDSCH as an example, if a PDSCH indicated by a certain SLIV value corresponding to a row in the TDRA table is associated with a downlink time slot but at least one of symbols corresponding to the PDSCH is an uplink symbol, then the SLIV value is considered as corresponding to invalid scheduling.

Optionally, in some embodiments, when all SLIVs in an i-th row in the TDRA table correspond to invalid scheduling, the i-th row is not used to determine any candidate physical channel reception opportunity, where i is a positive integer.

Optionally, in other embodiments, when at least one SLIV in a j-th row in the TDRA table corresponds to invalid scheduling, the j-th row is not used to determine any candidate physical channel reception opportunity, where j is a positive integer.

When the physical channel is a PDSCH as an example, the number of candidate PDSCH reception opportunities can be determined as follows.

Among the SLIV values corresponding to valid scheduling included in the TDRA table, a symbol index m1 of the end symbol corresponding to the SLIV associated with the earliest end symbol position of the candidate PDSCH reception opportunity is determined first. That is, m1 is the smallest symbol index value among the end symbols corresponding to the SLIVs corresponding to valid scheduling. The number of candidate PDSCH reception opportunities corresponding to the downlink time slot is increased by one, and the SLIVs corresponding to all candidate PDSCH reception opportunities having symbol index values of start symbols smaller than or equal to m1 all correspond to the same candidate PDSCH reception opportunity. Then, in the TDRA table, the SLIV values corresponding to all candidate PDSCH reception opportunities having symbol index values of start symbols smaller than or equal to m1 are excluded. Then, among the remaining SLIV values corresponding to valid scheduling included in the TDRA table, a symbol index m2 of the end symbol corresponding to the SLIV associated with the earliest end symbol position of the candidate PDSCH reception opportunity is determined, and the above process is repeated until all SLIV values in the TDRA table are traversed.

Optionally, a row in the TDRA table may be associated with a candidate physical channel reception opportunity or with a semi-persistent physical channel release.

Optionally, for an unscheduled candidate physical channel reception opportunity or a physical channel for which no feedback in the feedback time slot is indicated, the corresponding position in the first HARQ-ACK codebook transmitted in the feedback time slot is set to NACK information.

Optionally, in some embodiments of the present disclosure, the first device may further determine an arrangement of the first HARQ-ACK codebook corresponding to the first candidate physical channel reception opportunity group.

In some embodiments, the first device may determine the first HARQ-ACK codebook corresponding to the first candidate physical channel reception opportunity group according to at least one of a cell index or a time domain position corresponding to a candidate physical channel reception opportunity in the first candidate physical channel reception opportunity group.

As an example, in the case of a single carrier, the first HARQ-ACK codebook corresponding to the first candidate physical channel reception opportunity group may be arranged according to a chronological order of the candidate physical channel reception opportunities in the time domain.

As another example, in the case of multiple carriers, the first HARQ-ACK codebook corresponding to the first candidate physical channel reception opportunity group may be arranged according to a chronological order of the candidate physical channel reception opportunities in the time domain, and on each time-domain reception opportunity (or in other words, on the same time-domain reception opportunity), in an ascending order of cell indices.

For example, the first device is configured with cell 0 and cell 1, the target time slots corresponding to the first candidate physical channel reception opportunity group are time slot 0 and time slot 1, and the number of candidate physical channel reception opportunities corresponding to one target time slot is 1, the order of arrangement may be:

time slot 0 on cell 0, time slot 0 on cell 1, time slot 1 on cell 0, and time slot 1 on cell 1.

In other words, the HARQ-ACK information corresponding to the physical channels received on the candidate physical channel reception opportunities may be sequentially arranged according to the above order.

Optionally, in some embodiments of the present disclosure, the first HARQ-ACK codebook may include the HARQ-ACK information corresponding to the first candidate physical channel reception opportunity group, and a position of HARQ-ACK information corresponding to at least one of the S physical channels in the first HARQ-ACK codebook may correspond to a position of the at least one of the S physical channels in the first candidate physical channel reception opportunity group.

Optionally, in other embodiments of the present disclosure, the method 300 may further include:

At S302, the first device receives second control information transmitted by the second device, the second control information being used to release a first semi-persistent scheduling physical channel configuration corresponding to a plurality of semi-persistent scheduling physical channel receptions, the first HARQ-ACK codebook including HARQ-ACK information corresponding to the second control information, and a position of the HARQ-ACK information corresponding to the second control information in the first HARQ-ACK codebook being a position of at least one of the plurality of semi-persistent scheduling physical channel receptions in the first HARQ-ACK codebook.

Optionally, the second control information may correspond to the first control information format, or may not correspond to the first control information format. For example, the second control information may correspond to the first control information format, or may correspond to a second control information format. Optionally, formats corresponding to the first control information and the second control information may be same or different.

Optionally, the second control information may be used to instruct to release the first semi-persistent scheduling physical channel configuration. Here, if the physical channel is PDSCH, it corresponds to SPS PDSCH release.

Optionally, the second control information may include second DCI, the first semi-persistent physical channel configuration may include a first SPS PDSCH configuration, and the plurality of persistent scheduling physical channel receptions may include a plurality of SPS PDSCH receptions. That is, the second DCI may be used to release one SPS PDSCH configuration, and the one SPS PSDCH configuration may correspond to a plurality of SPS PDSCH receptions.

In this case, the position of the HARQ-ACK information corresponding to the second DCI in the first HARQ-ACK codebook may be the position of at least one of the plurality of SPS PDSCH receptions in the first HARQ-ACK codebook. That is, the position of the HARQ-ACK information corresponding to the second DCI in the first HARQ-ACK codebook may be arranged according to the time slot corresponding to the at least one SPS PDSCH reception.

As an example, the position of the HARQ-ACK information corresponding to the second control information in the first HARQ-ACK codebook may be a position of the first one of the plurality of semi-persistent scheduling physical channel receptions in the first HARQ-ACK codebook.

As another example, the position of the HARQ-ACK information corresponding to the second control information in the first HARQ-ACK codebook may be a position of the last one of the plurality of semi-persistent scheduling physical channel receptions in the first HARQ-ACK codebook.

As another example, the position of the HARQ-ACK information corresponding to the second control information in the first HARQ-ACK codebook may be a position of each of the plurality of semi-persistent scheduling physical channel receptions in the first HARQ-ACK codebook. For example, the ACK information corresponding to the second control information may be repeatedly transmitted at the position of each of the plurality of semi-persistent scheduling physical channel receptions in the first HARQ-ACK codebook.

Optionally, in some other embodiments of the present disclosure, the method 300 may further include:

At S303, the first device receives third control information transmitted by the second device, the third control information being used to release a plurality of semi-persistent scheduling physical channel configurations, and the plurality of semi-persistent scheduling physical channel configurations corresponding to a plurality of semi-persistent physical channel receptions.

In this case, the first device may determine that the position of the HARQ-ACK information corresponding to the third control information in the first HARQ-ACK codebook according to the physical channel reception corresponding to the first semi-persistent scheduling physical channel configuration of the plurality of semi-persistent scheduling physical channel configurations.

Optionally, the third control information may or may not correspond to the first control information format, that is, the formats corresponding to the first control information and the third control information may be same or different.

Optionally, the third control information may be used to instruct to release a plurality of semi-persistent scheduling physical channel configurations. Here, if the physical channel is PDSCH, it corresponds to SPS PDSCH release.

Optionally, the third control information may include third DCI, the plurality of semi-persistent physical channel configurations may include a plurality of SPS PDSCH configurations, and the semi-persistent scheduling physical channel receptions corresponding to the plurality of semi-persistent scheduling physical channel configurations may include a plurality of SPS PDSCH receptions. That is, the third DCI may be used to release a plurality of SPS PDSCH configurations, and the plurality of SPS PSDCH configurations correspond to the plurality of SPS PDSCH receptions.

Optionally, each of the plurality of semi-persistent scheduling physical channel configurations may correspond to one or more semi-persistent scheduling physical channel receptions.

Optionally, the first semi-persistent scheduling physical channel configuration may include at least one of the plurality of semi-persistent scheduling physical channel configurations, or the first semi-persistent scheduling physical channel configuration may include one of the plurality of semi-persistent scheduling physical channel configurations.

As an example, the first semi-persistent scheduling physical channel configuration may be a semi-persistent scheduling physical channel configuration with a smallest configuration index among the plurality of semi-persistent scheduling physical channel configurations.

That is, the first device may determine the position of the HARQ-ACK information corresponding to the third control information in the first HARQ-ACK codebook according to the semi-persistent physical channel configuration with the smallest configuration index.

Optionally, if the first semi-persistent scheduling physical channel configuration corresponds to a plurality of semi-persistent scheduling physical channel receptions, the first device may determine the position of the HARQ-ACK information corresponding to the third control information in the first HARQ-ACK codebook according to the position of at least one of the plurality of semi-persistent scheduling physical channel receptions corresponding to the first semi-persistent scheduling physical channel configuration in the first HARQ-ACK codebook.

As an example, the position of the HARQ-ACK information corresponding to the third control information in the first HARQ-ACK codebook may be a position of the first one of the plurality of semi-persistent scheduling physical channel receptions corresponding to the first semi-persistent scheduling physical channel configuration in the first HARQ-ACK codebook.

As another example, the position of the HARQ-ACK information corresponding to the third control information in the first HARQ-ACK codebook may be a position of the last one of the plurality of semi-persistent scheduling physical channel receptions corresponding to the first semi-persistent scheduling physical channel configuration in the first HARQ-ACK codebook.

As another example, the position of the HARQ-ACK information corresponding to the third control information in the first HARQ-ACK codebook may include a position of each of the plurality of semi-persistent scheduling physical channel receptions corresponding to the first semi-persistent scheduling physical channel configuration in the first HARQ-ACK codebook. For example, the ACK information corresponding to the third control information may be repeatedly transmitted at the position of each of the plurality of semi-persistent scheduling physical channel receptions corresponding to the first semi-persistent scheduling physical channel configuration in the first HARQ-ACK codebook.

An example will be given below for illustration, where the first device is a terminal device and the second device is a network device.

It is assumed that one DCI format can schedule a terminal device to receive up to 4 PDSCHs, and one downlink time slot corresponds to one candidate PDSCH reception opportunity. The HARQ feedback timing set configured by the network device includes 2 values, {2, 6}, and the HARQ-ACK feedback window corresponding to the feedback time slot n includes time slot n-9, time slot n-8, time slot n-7, time slot n-6, time slot n-5, time slot n-4, time slot n-3 and time slot n-2.

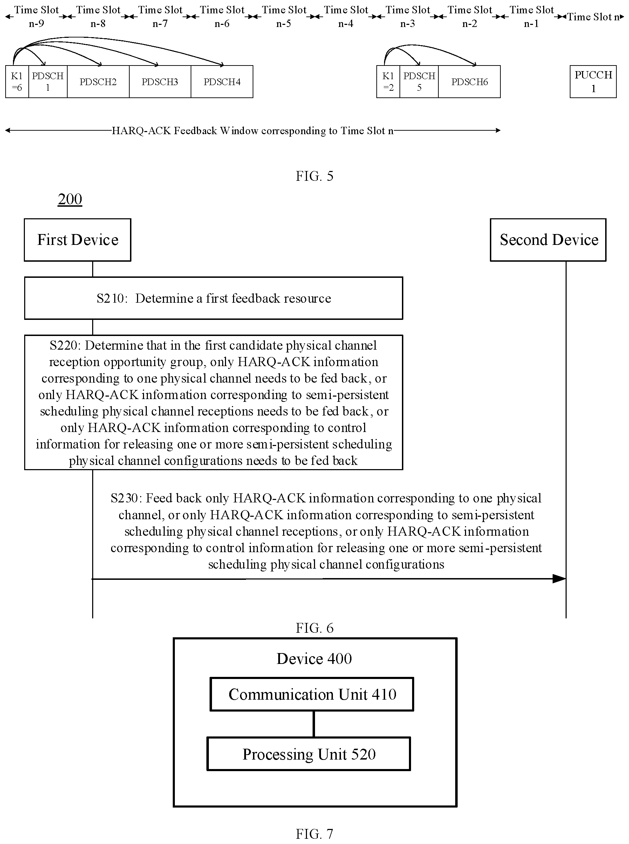

As shown in FIG. 5, if K1 in the DCI received by the terminal device in time slot n-9 indicates 6 and the DCI schedules 4 PDSCHs, PDSCH1, PDSCH2, PDSCH3, and PDSCH4; K1 in the DCI received in time slot n-3 indicates 2 and the DCI schedules 2 PDSCHs, PDSCH5 and PDSCH6, then the terminal device feeds back the decoding results of PDSCH1-PDSCH6 in time slot n.

Assuming that one PDSCH corresponds to 1-bit HARQ-ACK information, the HARQ-ACK codebook transmitted on PUCCH1 in time slot n is:

| | | | | | | | |
|---|---|---|---|---|---|---|---|
| Decoding result of PDSCH1 | Decoding result of PDSCH2 | Decoding result of PDSCH3 | Decoding result of PDSCH4 | NACK | NACK | Decoding result of PDSCH5 | Decoding result of PDSCH6 |

With the solution in the present disclosure, the first device can determine the size of the HARQ-ACK codebook and the position of the scheduled or activated physical channel in the HARQ-ACK codebook according to the configured control information format. Correspondingly, the second device can determine the size of the HARQ-ACK codebook and the position of the scheduled or activated physical channel in the HARQ-ACK codebook according to the configured control information format for the first device, so as to interpret the HARQ-ACK codebook, thereby avoiding the problem of inconsistent understanding of the HARQ-ACK codebook between the transmitter device and the receiver device.

FIG. 6 is a schematic interactive diagram illustrating a wireless communication method according to another embodiment of the present disclosure. As shown in FIG. 6, the method 200 may include at least part of the following content.

At S210, a first device determines a first feedback resource corresponding to a first candidate physical channel reception opportunity group.

At S220, the first device determines that in the first candidate physical channel reception opportunity group, only Hybrid Automatic Repeat reQuest Acknowledgement (HARQ-ACK) information corresponding to one physical channel needs to be fed back, or only HARQ-ACK information corresponding to semi-persistent scheduling physical channel receptions needs to be fed back, or only HARQ-ACK information corresponding to control information for releasing one or more semi-persistent scheduling physical channel configurations needs to be fed back.

At S230, in response to determining that only the HARQ-ACK information corresponding to one physical channel needs to be fed back, the first device feeds back only the HARQ-ACK information corresponding to the physical channel over the first feedback resource, or
in response to determining only the HARQ-ACK information corresponding to the semi-persistent scheduling physical channel receptions needs to be fed back, the first device feeds back only the HARQ-ACK information corresponding to the semi-persistent scheduling physical channel receptions over the first feedback resource; or
in response to determining that only the HARQ-ACK information corresponding to the control information for releasing the one or more semi-persistent scheduling physical channel configurations needs to be fed back, the first device feeds back only the HARQ-ACK information corresponding to the control information over the first feedback resource.

Correspondingly, the second device may also determine the first feedback resource and the first candidate physical channel reception opportunity group corresponding to the first feedback resource in a similar way, and the first candidate physical channel reception opportunity group may only include one physical channel, or only include the semi-persistent scheduling physical channel receptions, or only include the control information for releasing the one or more semi-persistent scheduling physical channel configurations.

Further, the second device may receive the feedback information transmitted by the first device over the first feedback resource, and determines that the feedback information only includes the HARQ-ACK information corresponding to the physical channel, or only include the HARQ-ACK information corresponding to the semi-persistent scheduling physical channel receptions, or only include the HARQ-ACK information corresponding to the control information, so as to avoid the problem of inconsistent understanding of the HARQ-ACK codebook between the transmitter device and the receiver device.

It should be understood that, for a scheme of determining the first feedback resource and the first candidate physical channel reception opportunity group corresponding to the first feedback resource, reference can be made to the related implementations of the method 300, and details will not be repeated here for brevity.

Optionally, in some embodiments, when one semi-persistent scheduling physical channel configuration corresponds to a plurality of semi-persistent scheduling physical channel receptions, different ones of the plurality of semi-persistent scheduling physical channel receptions may be used to transmit different Transport Blocks (TBs).

Optionally, the semi-persistent scheduling physical channel configuration may include an SPS PDSCH configuration or an SPS PSSCH configuration.

Optionally, the semi-persistent scheduling physical channel reception may include an SPS PDSCH reception or an SPS PSSCH reception.

Optionally, in some embodiments, S220 may include:
determining, by the first device, that in the first candidate physical channel reception opportunity group, only the HARQ-ACK information corresponding to one physical channel needs to be fed back, or only the HARQ-ACK information corresponding to the semi-persistent scheduling physical channel receptions needs to be fed back, or only the HARQ-ACK information corresponding to the control information for releasing the one or more semi-persistent scheduling physical channel configurations needs to be fed back according to at least one of scheduling counter information, M, or a Time Domain Resource Assignment (TDRA) table,
where M represents a maximum number of physical channels allowable to be scheduled by a first control information format, or M represents a maximum number of time slots occupied by physical channels allowable to be scheduled by the first control information format, and
the first control information format is a control information format configured for the first device, and the TDRA table is a TDRA table corresponding to the first control information format.

Optionally, the scheduling counter information may include Counter DAI (C-DAI) information.

Optionally, the scheduling counter information may include Counter Sidelink Assignment Index (C-SAI) information.

Optionally, the scheduling counter information may indicate one of the following:
the scheduling counter information indicates which physical channel the first one of the physical channels associated with the first control information is within the HARQ feedback window. For example, the C-DAI information in the first DCI indicates which physical channel the first one of the physical channels associated with the first DCI is within the HARQ feedback window.

The scheduling counter information indicates which physical channel the last one of the physical channels associated with the first control information is within the HARQ feedback window. For example, the C-DAI information in the first DCI indicates which physical channel the last one of the physical channels associated with the first DCI is within the HARQ feedback window.

The scheduling counter information indicates which control information the first control information is among control information transmitted by the second device within the HARQ feedback window. For example, the C-DAI information in the first DCI indicates which DCI the first DCI is within the HARQ feedback window.

Optionally, the scheduling counter information indicates which physical channel the first one of the physical channels associated with the first control information is within the HARQ feedback window. For example, the C-DAI information in the first DCI indicates which physical channel the first one of the physical channels associated with the first DCI is within the HARQ feedback window.

Optionally, in some embodiments, the first device may determine that only the HARQ-ACK information corresponding to one physical channel needs to be fed back in the first candidate physical channel reception opportunity group according to the first control information, the first control information corresponding to the first control information format, the first control information being used to schedule one physical channel transmission, and the scheduling counter information in the first control information indicates 1.

It should be understood that when it is determined that only the HARQ-ACK information corresponding to the semi-persistent scheduling physical channel receptions needs to be fed back, the embodiment of the present disclosure is not limited to any specific order of the HARQ-ACK information corresponding to the semi-persistent scheduling physical channel receptions, as long as the transmitter and the receiver have the same understanding of the order.

Optionally, in some embodiments, the method 200 may further include, when it is determined that only the HARQ-ACK information corresponding to the semi-persistent scheduling physical channel receptions needs to be fed back:
determining, by the first terminal, an order of HARQ-ACK information corresponding to semi-persistent scheduling physical channel receptions corresponding to semi-persistent scheduling physical channel configurations that need to be fed back, according to at least one of a number of semi-persistent scheduling physical channel configurations that need to be fed back, a number of semi-persistent scheduling physical channel receptions corresponding to the semi-persistent scheduling physical channel configurations that need to be fed back, configuration indices corresponding to the semi-persistent scheduling physical channel configurations that need to be fed back, or the cell indices corresponding to the semi-persistent scheduling physical channel configurations that need to be fed back.

As an example, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there is one semi-persistent scheduling physical channel configuration that needs to be fed back, the semi-persistent scheduling physical channel configuration corresponds to a plurality of semi-persistent scheduling physical channel receptions, and the order of the HARQ-ACK information corresponding to the plurality of semi-persistent scheduling physical channel receptions is a chronological order of the plurality of semi-persistent scheduling physical channel receptions in time domain.

As an example, the order of the HARQ-ACK information corresponding to the plurality of semi-persistent scheduling physical channel receptions may be:
an ascending order of time slot indices corresponding to the plurality of semi-persistent scheduling physical channel receptions.

For example, the one semi-persistent scheduling physical channel configuration is an SPS PDSCH configuration, the SPS PDSCH configuration corresponds to 4 SPS PDSCH receptions, SPS PDSCH Reception 1~SPS PDSCH Reception 4, the corresponding time slots are n-9, n-8 , n-7, and n-6, then the order of the HARQ-ACK information corresponding to the four SPS PDSCH receptions is arranged in the order of SPS PDSCH Reception 1, SPS PDSCH Reception 2, SPS PDSCH Reception 3, and SPS PDSCH Reception 4, and the corresponding order of the HARQ-ACK information is: Decoding Result of SPS PDSCH Reception 1, Decoding Result of SPS PDSCH Reception 2, Decoding Result of SPS PDSCH Reception 3, and Decoding Result of SPS PDSCH Reception 4.

As another example, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations;
for a same cell index, an ascending order of configuration indices corresponding to the semi-persistent scheduling physical channel configurations; and
for a same configuration index, a chronological order of the semi-persistent scheduling physical channel receptions in time domain.

For example, the plurality of semi-persistent scheduling physical channel configurations are four SPS PDSCH configurations, SPS PDSCH Configurations 1-4, among which SPS PDSCH Configuration 1 and SPS PDSCH Configuration 2 correspond to Cell Index 1, SPS PDSCH Configuration 3 and SPS PDSCH Configuration 4 correspond to Cell Index 0, SPS PDSCH Configuration 1 corresponds to one SPS PDSCH reception, denoted as SPS PDSCH Reception 1, SPS PDSCH Configuration 2 corresponds to two SPS PDSCH receptions, denoted as SPS PDSCH Reception 2 and SPS PDSCH Reception 3, SPS PDSCH Configuration 3 corresponds to one SPS PDSCH reception, denoted as SPS PDSCH Reception 4, and SPS PDSCH Configuration 4 corresponds to two SPS PDSCH receptions, denoted as SPS PDSCH Reception 5 and SPS PDSCH Reception 6. Here, SPS PDSCH Reception 1~SPS PDSCH Reception 6 correspond to time slots n-6, n-8, n-9, n-7, n-5, and n-4, respectively.

In one implementation, the above SPS PDSCH receptions are arranged according to an ascending order of cell indices corresponding to the SPS PDSCH configurations first. That is, first for the SPS PDSCH receptions corresponding to Cell 0, the SPS PDSCH receptions with the same cell index are arranged according to an ascending order of configuration indices. For the SPS PDSCH receptions with the same configuration index, the SPS PDSCH receptions are arranged according to an ascending order of corresponding time slots. The resulting order of HARQ-ACK information is:

HARQ-ACK information for SPS PDSCH Reception 4, HARQ-ACK information for SPS PDSCH Reception 5, HARQ-ACK information for SPS PDSCH Reception 6, HARQ-ACK information for SPS PDSCH Reception 1, HARQ-ACK information for SPS PDSCH Reception 3, and HARQ-ACK information for SPS PDSCH Reception 2.

As another example, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations; and
for a same cell index, a chronological order of the semi-persistent scheduling physical channel receptions in time domain.

Following the above example, in another implementation, the above SPS PDSCHs are arranged according to an ascending order of cell indices first. That is, first for the SPS PDSCH receptions corresponding to Cell 0, the SPS PDSCH receptions with the same cell index are arranged according to an ascending order of time slots corresponding to the SPS PDSCH receptions. The resulting order of HARQ-ACK information is:
HARQ-ACK information for SPS PDSCH Reception 4, HARQ-ACK information for SPS PDSCH Reception 5, HARQ-ACK information for SPS PDSCH Reception 6, HARQ-ACK information for SPS PDSCH Reception 3, HARQ-ACK information for SPS PDSCH Reception 2, and HARQ-ACK information for SPS PDSCH Reception 1.

Optionally, the above SPS PDSCH receptions may only include valid SPS PDSCH receptions.

Optionally, in some embodiments, different ones of the plurality of semi-persistent scheduling physical channel receptions may be used to transmit different Transport Blocks (TBs).

To summarize, when the first device receives a semi-persistent scheduling physical channel configuration corresponding to a plurality of semi-persistent scheduling physical channel receptions, it can determine the arrangement of the HARQ-ACK information corresponding to the semi-persistent scheduling physical channel receptions. Correspondingly, the receiver device, that is, the second device, can interpret the codebook in a similar way, so as to avoid inconsistent understanding of the HARQ-ACK codebook between the transmitter device and the receiver device.

The preferred embodiments of the present disclosure have been described in detail above with reference to the accompanying drawings. However, the present disclosure is not limited to the specific details of the above embodiments. Various simple modifications can be made to the technical solutions of the present disclosure without departing from the scope of the technical concept of the present disclosure. These simple modifications all belong to the protection scope of the present disclosure. For example, the specific technical features described in the above specific embodiments can be combined as appropriate provided that they do not conflict. In order to avoid unnecessary repetition, the description of various possible combinations will be omitted here. In another example, the embodiments of the present disclosure can also be combined as appropriate, as long as they do not violate the concept of the present disclosure, and they should also be regarded as the content disclosed in the present disclosure. In yet another example, the embodiments of the present disclosure and/or technical features therein can be combined with the prior art as appropriate, provided that they do not conflict, and the resulting technical solutions are to be encompassed by the scope of the present disclosure.

It should also be understood that, in the method embodiments of the present disclosure, the values of the sequence numbers of the above processes do not mean the order of execution, and the execution order of each process should be determined by its functions and internal logics, and the implementation of the present disclosure is not limited to any specific order. In addition, in the embodiments of the present disclosure, the terms "downlink" and "uplink" are used to indicate the transmission direction of signals or data. Here, "downlink" is used to indicate that the transmission direction of signals or data is a first direction from a station to a user equipment of a cell, and "uplink" is used to indicate that the transmission direction of signals or data is a second direction from a user equipment in a cell to a station. For example, a "downlink signal" indicates that the transmission direction of the signal is the first direction. In addition, in this embodiment of the present disclosure, the term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

The method embodiments of the present disclosure have been described in detail above with reference to FIGS. 4-6, and the apparatus embodiments of the present disclosure will be described in detail below with reference to FIG. 7 to FIG. 12. It should be understood that the apparatus embodiments and the method embodiments correspond to each other, and for similar descriptions, reference can be made to the method embodiments.

FIG. 7 shows a schematic block diagram of a wireless communication device 400 according to an embodiment of the present disclosure. As shown in FIG. 7, the wireless communication device 400 includes:
a communication unit 410 configured to transmit a first Hybrid Automatic Repeat reQuest Acknowledgement (HARQ-ACK) codebook to a second device over a first feedback resource, the first HARQ-ACK codebook being determined according to a first control information format.

The first control information format is a control information format configured for the device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

Optionally, in some embodiments, the communication unit 410 may be further configured to:
receive first control information transmitted by the second device, the first control information corresponding to the first control information format, and the first control information being used to schedule or activate transmission of S physical channels, where S is greater than or equal to 1 and smaller than or equal to M, and the first HARQ-ACK codebook includes HARQ-ACK information corresponding to at least one of the S physical channels.

Optionally, in some embodiments, the first feedback resource may be a feedback resource in a feedback time slot, and the feedback time slot may be determined according to a time slot corresponding to the last one of the S physical channels, or the feedback time slot may be determined according to a time slot corresponding to the first one of the S physical channels.

Optionally, in some embodiments, when S is greater than or equal to 2, different ones of the S physical channels may be used to transmit different Transport Blocks (TBs).

Optionally, in some embodiments, the first HARQ-ACK codebook may have a size determined according to M.

Optionally, in some embodiments, the first HARQ-ACK codebook may correspond to a first candidate physical channel reception opportunity group, and the first candidate physical channel reception opportunity group may correspond to at least one target time slot.

Optionally, in some embodiments, the first HARQ-ACK codebook may correspond to a first candidate physical channel reception opportunity group, and the first candidate physical channel reception opportunity group may be determined according to M and/or S; and/or
a target time slot corresponding to the first candidate physical channel reception opportunity group may be determined according to K1 in a HARQ feedback timing set and/or M.

Optionally, in some embodiments, the target time slots corresponding to the first candidate physical channel reception opportunity group may include a union of target time slots determined according to K1 and M.

Optionally, in some embodiments, a number of candidate physical channel reception opportunities corresponding to one target time slot may be 1; or
the number of candidate physical channel reception opportunities corresponding to one target time slot may be determined according to a Start and Length Indicator Value (SLIV) in a Time Domain Resource Assignment (TDRA) table.

Optionally, in some embodiments, a number of candidate physical channel reception opportunities corresponding to one target time slot may be determined according to a SLIV in a Time Domain Resource Assignment (TDRA) table, and the SLIV may be an SLIV corresponding to valid scheduling;
when all SLIVs in an i-th row in the TDRA table correspond to invalid scheduling, the i-th row is not used to determine any candidate physical channel reception opportunity, where i is a positive integer; or
when at least one SLIV in a j-th row in the TDRA table corresponds to invalid scheduling, the j-th row is not used to determine any candidate physical channel reception opportunity, where j is a positive integer.

Optionally, in some embodiments, the first HARQ-ACK codebook may include HARQ-ACK information corresponding to a first candidate physical channel reception opportunity group, and a position of HARQ-ACK information corresponding to at least one of the S physical channels in the first HARQ-ACK codebook may correspond to a position of the at least one of the S physical channels in the first candidate physical channel reception opportunity group.

Optionally, in some embodiments, the communication unit 410 may be further configured to:
receive second control information transmitted by the second device, the second control information being used to release a first semi-persistent scheduling physical channel configuration corresponding to a plurality of semi-persistent scheduling physical channel receptions, the first HARQ-ACK codebook including HARQ-ACK information corresponding to the second control information, and a position of the HARQ-ACK information corresponding to the second control information in the first HARQ-ACK codebook being a position of at least one of the plurality of semi-persistent scheduling physical channel receptions in the first HARQ-ACK codebook.

Optionally, in some embodiments, the position of the HARQ-ACK information corresponding to the second control information in the first HARQ-ACK codebook may be a position of the first one of the plurality of semi-persistent scheduling physical channel receptions in the first HARQ-ACK codebook; or
the position of the HARQ-ACK information corresponding to the second control information in the first HARQ-ACK codebook may be a position of the last one of the plurality of semi-persistent scheduling physical channel receptions in the first HARQ-ACK codebook; or
the position of the HARQ-ACK information corresponding to the second control information in the first HARQ-ACK codebook may be a position of each of the plurality of semi-persistent scheduling physical channel receptions in the first HARQ-ACK codebook.

Optionally, in some embodiments, the communication unit 410 may be further configured to:
receive third control information transmitted by the second device, the third control information being used to release a plurality of semi-persistent scheduling physical channel configurations, the first semi-persistent scheduling physical channel configuration of the plurality of semi-persistent scheduling physical channel configurations corresponding to a plurality of semi-persistent scheduling physical channel receptions, the first HARQ-ACK codebook including HARQ-ACK information corresponding to the third control information, and a position of the HARQ-ACK information corresponding to the third control information in the first HARQ-ACK codebook being a position of at least one of the plurality of semi-persistent scheduling physical channel receptions corresponding to the first semi-persistent scheduling physical channel configuration in the first HARQ-ACK codebook. The first semi-persistent scheduling physical channel configuration is a semi-persistent scheduling physical channel configuration with a smallest configuration index among the plurality of semi-persistent scheduling physical channel configurations.

Optionally, in some embodiments, the position of the HARQ-ACK information corresponding to the third control information in the first HARQ-ACK codebook may be a position of the first one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook may be a position of the last one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook may include a position of each of the plurality of semi-persistent scheduling physical channel receptions corresponding to the first semi-persistent scheduling physical channel configuration in the first HARQ-ACK codebook.

Optionally, in some embodiments, different ones of the plurality of semi-persistent scheduling physical channel receptions may be used to transmit different Transport Block (TBs).

Optionally, in some embodiments, the device may include a terminal device, and the second device may include a network device; or
the device may include a first terminal device, and the second device may include a second terminal device.

Optionally, in some embodiments, the device 400 may further include a processing unit 420 configured to determine the first feedback resource and the size of the first HARQ-ACK codebook. The first HARQ-ACK codebook corresponds to at least one of the first candidate physical channel reception opportunity group, the target time slots corresponding to the first candidate physical channel reception opportunity group, or the position of the at least one physical channel in the first HARQ-ACK codebook. For the details of the determination method, reference can be made to the detailed description of the method embodiments, and description thereof will be omitted here.

Optionally, in some embodiments, the above communication unit may be a communication interface or a transceiver, or an input/output interface of a communication chip or a system-on-chip. The above processing unit may be one or more processors.

It should be understood that the wireless communication device 400 according to the embodiment of the present disclosure may correspond to the terminal device in the method embodiment of the present disclosure, and the above and other operations and/or functions of the respective units in the wireless communication device 400 are provided for the purpose of implementing the process flow corresponding to the first device in the method 300 shown in FIG. 4, and details thereof will be not omitted here for brevity.

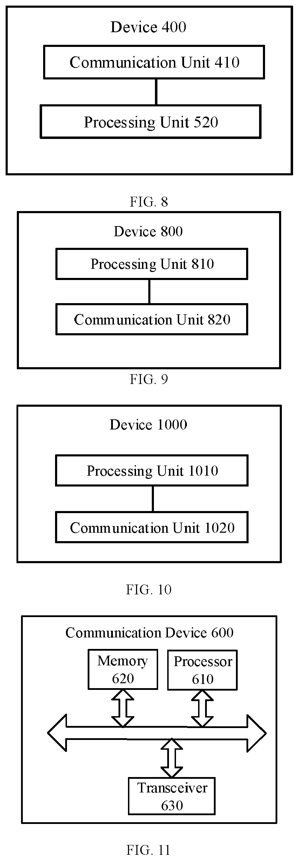

FIG. 8 shows a schematic block diagram of a wireless communication device 500 according to an embodiment of the present disclosure. As shown in FIG. 8, the device 500 includes:
a communication unit 510 configured to receive a first Hybrid Automatic Repeat reQuest Acknowledgement (HARQ-ACK) codebook transmitted by a first device over first feedback resource, the first HARQ-ACK codebook being determined according to a first control information format.

The first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

Optionally, in some embodiments, the communication unit 510 may be further configured to:
transmit first control information to the first device, the first control information corresponding to the first control information format, and the first control information being used to schedule or activate transmission of S physical channels, where S is greater than or equal to 1 and smaller than or equal to M, and the first HARQ-ACK codebook includes HARQ-ACK information corresponding to at least one of the S physical channels.

Optionally, in some embodiments, the first feedback resource may be a feedback resource in a feedback time slot, and the feedback time slot may be determined according to a time slot corresponding to the last one of the S physical channels, or the feedback time slot may be determined according to a time slot corresponding to the first one of the S physical channels.

Optionally, in some embodiments, when S is greater than or equal to 2, different ones of the S physical channels may be used to transmit different Transport Blocks (TBs).

Optionally, in some embodiments, the first HARQ-ACK codebook may have a size determined according to M.

Optionally, in some embodiments, the first HARQ-ACK codebook may correspond to a first candidate physical channel reception opportunity group, and the first candidate physical channel reception opportunity group may correspond to at least one target time slot.

Optionally, in some embodiments, the first HARQ-ACK codebook may correspond to a first candidate physical channel reception opportunity group, and the first candidate physical channel reception opportunity group may be determined according to M and/or S; and/or
a target time slot corresponding to the first candidate physical channel reception opportunity group may be determined according to K1 in a HARQ feedback timing set and/or M.

Optionally, in some embodiments, the target time slots corresponding to the first candidate physical channel reception opportunity group may include a union of target time slots determined according to K1 and M.

Optionally, in some embodiments, a number of candidate physical channel reception opportunities corresponding to one target time slot may be 1; or
the number of candidate physical channel reception opportunities corresponding to one target time slot may be determined according to a Start and Length Indicator Value (SLIV) in a Time Domain Resource Assignment (TDRA) table.

Optionally, in some embodiments, a number of candidate physical channel reception opportunities corresponding to one target time slot may be determined according to a SLIV in a Time Domain Resource Assignment (TDRA) table, and the SLIV is an SLIV corresponding to valid scheduling;
wherein when all SLIVs in an i-th row in the TDRA table correspond to invalid scheduling, the i-th row is not used to determine any candidate physical channel reception opportunity, where i is a positive integer; or
when at least one SLIV in a j-th row in the TDRA table corresponds to invalid scheduling, the j-th row is not used to determine any candidate physical channel reception opportunity, where j is a positive integer.

Optionally, in some embodiments, the first HARQ-ACK codebook may include HARQ-ACK information corresponding to a first candidate physical channel reception opportunity group, and a position of HARQ-ACK information corresponding to at least one of the S physical channels in the first HARQ-ACK codebook may correspond to a position of the at least one of the S physical channels in the first candidate physical channel reception opportunity group.

Optionally, in some embodiments, the communication unit 510 may be further configured to:
transmit second control information to the first device, the second control information being used to release a first semi-persistent scheduling physical channel configuration corresponding to a plurality of semi-persistent scheduling physical channel receptions, the first HARQ-ACK codebook including HARQ-ACK information corresponding to the second control information, and a position of the HARQ-ACK information corresponding to the second control information in the first HARQ-ACK codebook being a position of at least one of the plurality of semi-persistent scheduling physical channel receptions in the first HARQ-ACK codebook.

Optionally, in some embodiments, the position of the HARQ-ACK information corresponding to the second control information in the first HARQ-ACK codebook may be a position of the first one of the plurality of semi-persistent scheduling physical channel receptions in the first HARQ-ACK codebook; or
the position of the HARQ-ACK information corresponding to the second control information in the first HARQ-ACK codebook may be a position of the last one of the plurality of semi-persistent scheduling physical channel receptions in the first HARQ-ACK codebook; or
the position of the HARQ-ACK information corresponding to the second control information in the first HARQ-ACK codebook may be a position of each of the plurality of semi-persistent scheduling physical channel receptions in the first HARQ-ACK codebook.

Optionally, in some embodiments, the communication unit 510 may be further configured to:
transmit third control information to the first device, the third control information being used to release a plurality of semi-persistent scheduling physical channel configurations, the first semi-persistent scheduling physical channel configuration of the plurality of semi-persistent scheduling physical channel configurations corresponding to a plurality of semi-persistent scheduling physical channel receptions, the first HARQ-ACK codebook including HARQ-ACK information corresponding to the third control information, and a position of the HARQ-ACK information corresponding to the third control information in the first HARQ-ACK codebook being a position of at least one of the plurality of semi-persistent scheduling physical channel receptions corresponding to the first semi-persistent scheduling physical channel configuration in the first HARQ-ACK codebook. The first semi-persistent scheduling physical channel configuration is a semi-persistent scheduling physical channel configuration with a smallest configuration index among the plurality of semi-persistent scheduling physical channel configurations.

Optionally, in some embodiments, the position of the HARQ-ACK information corresponding to the third control information in the first HARQ-ACK codebook may be a position of the first one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook may be a position of the last one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook includes a position of each of the plurality of semi-persistent scheduling physical channel receptions corresponding to the first semi-persistent scheduling physical channel configuration in the first HARQ-ACK codebook.

Optionally, in some embodiments, different ones of the plurality of semi-persistent scheduling physical channel receptions may be used to transmit different Transport Block (TBs).

Optionally, the first device may include a terminal device, and the device may include a network device; or
the first device may include a first terminal device, and the device 500 may include a second terminal device.

Optionally, in some embodiments, the device 500 may further include a processing unit 520 configured to determine the first feedback resource and the size of the first HARQ-ACK codebook. The first HARQ-ACK codebook corresponds to at least one of the first candidate physical channel reception opportunity group, the target time slots corresponding to the first candidate physical channel reception opportunity group, or the position of the at least one physical channel in the first HARQ-ACK codebook. For the details of the determination method, reference can be made to the detailed description of the method embodiments, and description thereof will be omitted here.

Optionally, in some embodiments, the above communication unit may be a communication interface or a transceiver, or an input/output interface of a communication chip or a system-on-chip. The above processing unit may be one or more processors.

It should be understood that the device 500 according to the embodiment of the present disclosure may correspond to the second device in the method embodiment of the present disclosure, and the above and other operations and/or functions of the respective units in the device 500 are provided for the purpose of implementing the process flow corresponding to the second device in the method 300 shown in FIG. 4, and details thereof will be not omitted here for brevity.

FIG. 9 shows a schematic block diagram of a wireless communication device 800 according to an embodiment of the present disclosure. As shown in FIG. 9, the device 800 includes:
a processing unit 810 configured to determine a first feedback resource corresponding to a first candidate physical channel reception opportunity group; and determine that in the first candidate physical channel reception opportunity group, only Hybrid Automatic Repeat reQuest Acknowledgement (HARQ-ACK) information corresponding to one physical channel needs to be fed back, or only HARQ-ACK information corresponding to semi-persistent scheduling physical channel receptions needs to be fed back, or only HARQ-ACK information corresponding to control information for releasing one or more semi-persistent scheduling physical channel configurations needs to be fed back; and
a communication unit 820 is configured to feed, in response to determining that only the HARQ-ACK information corresponding to one physical channel needs to be fed back, back only the HARQ-ACK information corresponding to the physical channel over the first feedback resource; or feed, in response to determining only the HARQ-ACK information corresponding to the semi-persistent scheduling physical channel receptions needs to be fed back, back only the HARQ-ACK information corresponding to the semi-persistent scheduling physical channel receptions over the first feedback resource; or feed, in response to determining that only the HARQ-ACK information corresponding to the control information for releasing the one or more semi-persistent scheduling physical channel configurations needs to be fed back, back only the HARQ-ACK information corresponding to the control information over the first feedback resource.

Optionally, in some embodiments, the processing unit 810 may be further configured to:
determine that in the first candidate physical channel reception opportunity group, only the HARQ-ACK information corresponding to one physical channel needs to be fed back, or only the HARQ-ACK information corresponding to the semi-persistent scheduling physical channel receptions needs to be fed back, or only the HARQ-ACK information corresponding to the control information for releasing the one or more semi-persistent scheduling physical channel configurations needs to be fed back according to at least one of scheduling counter information, M, or a Time Domain Resource Assignment (TDRA) table,
where M represents a maximum number of physical channels allowable to be scheduled by a first control information format, or M represents a maximum number of time slots occupied by physical channels allowable to be scheduled by the first control information format, and
the first control information format is a control information format configured for the device 800, and the TDRA table is a TDRA table corresponding to the first control information format.

Optionally, in some embodiments, the processing unit 810 may determine that only the HARQ-ACK information corresponding to one physical channel needs to be fed back in the first candidate physical channel reception opportunity group according to the first control information, the first control information corresponding to the first control information format, the first control information being used to schedule one physical channel transmission, and the scheduling counter information in the first control information indicates 1.

Optionally, in some embodiments, when it is determined that only the HARQ-ACK information corresponding to the semi-persistent scheduling physical channel receptions needs to be fed back, the processing unit 810 may be further configured to:
determine an order of HARQ-ACK information corresponding to semi-persistent scheduling physical channel receptions corresponding to semi-persistent scheduling physical channel configurations that need to be fed back, according to at least one of a number of semi-persistent scheduling physical channel configurations that need to be fed back, a number of semi-persistent scheduling physical channel receptions corresponding to the semi-persistent scheduling physical channel configurations that need to be fed back, configuration indices corresponding to the semi-persistent scheduling physical channel configurations that need to be fed back, or the cell indices corresponding to the semi-persistent scheduling physical channel configurations that need to be fed back.

Optionally, in some embodiments, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there is one semi-persistent scheduling physical channel configuration that needs to be fed back, the semi-persistent scheduling physical channel configuration corresponds to a plurality of semi-persistent scheduling physical channel receptions, and the order of the HARQ-ACK information corresponding to the plurality of semi-persistent scheduling physical channel receptions is a chronological order of the plurality of semi-persistent scheduling physical channel receptions in time domain.

Optionally, in some embodiments, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations;
for a same cell index, an ascending order of configuration indices corresponding to the semi-persistent scheduling physical channel configurations; and
for a same configuration index, a chronological order of the semi-persistent scheduling physical channel receptions in time domain.

Optionally, in some embodiments, when it is determined that only the HARQ-ACK information corresponding to the semi-persistent scheduling physical channel receptions needs to be fed back, the order of the HARQ-ACK information corresponding to the semi-persistent scheduling physical channel receptions that need to be fed back may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations; and
for a same cell index, a chronological order of the semi-persistent scheduling physical channel receptions in time domain.

Optionally, in some embodiments, when one semi-persistent scheduling physical channel configuration corresponds to a plurality of semi-persistent scheduling physical channel receptions, different ones of the plurality of semi-persistent scheduling physical channel receptions may be used to transmit different Transport Blocks (TBs).

Optionally, in some embodiments, the above communication unit may be a communication interface or a transceiver, or an input/output interface of a communication chip or a system-on-chip. The above processing unit may be one or more processors.

It should be understood that the device 800 according to the embodiment of the present disclosure may correspond to the terminal device in the method embodiment of the present disclosure, and the above and other operations and/or functions of the respective units in the device 800 are provided for the purpose of implementing the process flow corresponding to the first device in the method 200 shown in FIG. 6, and details thereof will be not omitted here for brevity.

FIG. 10 is a schematic block diagram of a wireless communication device 1000 according to an embodiment of the present disclosure. The device 1000 of FIG. 10 includes:
a processing unit 1010 is configured to determine a first feedback resource corresponding to a first candidate physical channel reception opportunity group, the first candidate physical channel access opportunity group including only one physical channel, or only semi-persistent scheduling physical channel receptions, or only control information for releasing one or more semi-persistent scheduling physical channel configurations; and
a communication unit 1020 configured to receive feedback information transmitted by a first device over the first feedback resource, the feedback information including only Hybrid Automatic Repeat reQuest Acknowledgement (HARQ-ACK) information corresponding to the physical channel, or only HARQ-ACK information corresponding to the semi-persistent scheduling physical channel receptions, or only HARQ-ACK information corresponding to the control information.

Optionally, in some embodiments, the first candidate physical channel access opportunity group including only one physical channel, or only the semi-persistent scheduling physical channel receptions, or only the control information for releasing the one or more semi-persistent scheduling physical channel configurations may be determined according to at least one of scheduling counter information, M, or a Time Domain Resource Assignment (TDRA) table,
where M represents a maximum number of physical channels allowable to be scheduled by a first control information format, or M represents a maximum number of time slots occupied by physical channels allowable to be scheduled by the first control information format, and
the first control information format is a control information format configured for the first device, and the TDRA table is a TDRA table corresponding to the first control information format.

Optionally, in some embodiments, the first candidate physical channel access opportunity group including only one physical channel may be determined according to first control information, the first control information corresponding to the first control information format, the first control information being used to schedule one physical channel transmission, and the scheduling counter information in the first control information indicates 1.

Optionally, in some embodiments, when the first device determines that the feedback information includes only the HARQ-ACK information corresponding to the semi-persistent scheduling physical channel receptions, an order of the HARQ-ACK information corresponding to the semi-persistent scheduling physical channel receptions may include:
when there is one semi-persistent scheduling physical channel configuration, the semi-persistent scheduling physical channel configuration corresponds to a plurality of semi-persistent scheduling physical channel receptions, and the order of the HARQ-ACK information corresponding to the plurality of semi-persistent scheduling physical channel receptions is a chronological order of the plurality of semi-persistent scheduling physical channel receptions in time domain.

Optionally, in some embodiments, when the first device determines that the feedback information includes only the HARQ-ACK information corresponding to the semi-persistent scheduling physical channel receptions, an order of the HARQ-ACK information corresponding to the semi-persistent scheduling physical channel receptions may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations;
for a same cell index, an ascending order of configuration indices corresponding to the semi-persistent scheduling physical channel configurations; and
for a same configuration index, a chronological order of the semi-persistent scheduling physical channel receptions in time domain.

Optionally, in some embodiments, when the first device determines that the feedback information includes only the HARQ-ACK information corresponding to the semi-persistent scheduling physical channel receptions, an order of the HARQ-ACK information corresponding to the semi-persistent scheduling physical channel receptions may include:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations; and
for a same cell index, a chronological order of the semi-persistent scheduling physical channel receptions in time domain.

Optionally, in some embodiments, when one semi-persistent scheduling physical channel configuration corresponds to a plurality of semi-persistent scheduling physical channel receptions, different ones of the plurality of semi-persistent scheduling physical channel receptions may be used to transmit different Transport Blocks (TBs).

Optionally, in some embodiments, the above communication unit may be a communication interface or a transceiver, or an input/output interface of a communication chip or a system-on-chip. The above processing unit may be one or more processors.

It should be understood that the device 1000 according to the embodiment of the present disclosure may correspond to the second device in the method embodiment of the present disclosure, and the above and other operations and/or functions of the respective units in the device 500 are provided for the purpose of implementing the process flow corresponding to the second device in the method 200 shown in FIG. 6, and details thereof will be not omitted here for brevity.

FIG. 11 is a schematic diagram showing a structure of a communication device 600 according to an embodiment of the present disclosure. The communication device 600 shown in FIG. 11 includes a processor 610, and the processor 610 can invoke and execute a computer program from a memory to implement the method in the embodiment of the present disclosure.

Optionally, as shown in FIG. 11, the communication device 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

Optionally, as shown in FIG. 11, the communication device 600 may further include a transceiver 630, and the processor 610 may control the transceiver 630 to communicate with other devices, and in particular, transmit information or data to other devices, or receive information or data transmitted by other devices.

Here, the transceiver 630 may include a transmitter and a receiver. The transceiver 630 may further include one or more antennas.

Optionally, the communication device 600 may specifically be the network device according to the embodiment of the present disclosure, and the communication device 600 may implement the corresponding processes implemented by the network device in any of the methods according to the embodiments of the present disclosure. For the sake of brevity, details thereof will be omitted here.

Optionally, the communication device 600 may specifically be the first device according to the embodiment of the present disclosure, and the communication device 600 may implement the corresponding processes implemented by the first device in any of the methods according to the embodiments of the present disclosure. For the sake of brevity, details thereof will be omitted here.

Optionally, in some embodiments, the communication device 600 may correspond to the device 400 in the above embodiment, and may correspond to the first device in the method 300 according to the embodiment of the present disclosure. Here, the processor 610 may be configured to perform related operations of the processing unit 420 in the device 400, and the transceiver 630 may be configured to perform related operations of the communication unit 410 in the device 400. For specific implementation, reference can be made to the related descriptions of the above embodiment, and for the sake of brevity, description thereof will be omitted here.

Optionally, in some embodiments, the communication device 600 may correspond to the device 800 in the above embodiment, and may correspond to the first device in the method 200 according to the embodiment of the present disclosure. Here, the processor 610 may be configured to perform related operations of the processing unit 810 in the device 800, and the transceiver 630 may be configured to perform related operations of the communication unit 820 in the device 800. For specific implementation, reference can be made to the related descriptions of the above embodiment, and for the sake of brevity, description thereof will be omitted here.

Optionally, the communication device 600 may specifically be the second device in the embodiment of the present disclosure, and the communication device 600 may implement the corresponding processes implemented by the second device in each method of the embodiments of the present disclosure. For the sake of brevity, description thereof will be omitted here.

Optionally, in some embodiments, the communication device 600 may correspond to the device 500 in the above embodiment, and may correspond to the second device in the method 200 according to the embodiment of the present disclosure. Here, the processor 610 may be configured to perform related operations of the processing unit 520 in the device 500, and the transceiver 630 may be configured to perform related operations of the communication unit 510 in the device 500. For specific implementation, reference can be made to the related descriptions of the above embodiment, and for the sake of brevity, description thereof will be omitted here.

Optionally, in some embodiments, the communication device 600 may correspond to the device 1000 in the above embodiment, and may correspond to the second device in the method 200 according to the embodiment of the present disclosure. Here, the processor 610 may be configured to perform related operations of the processing unit 1010 in the device 1000, and the transceiver 630 may be configured to perform related operations of the communication unit 1020 in the device 1000. For specific implementation, reference can be made to the related descriptions of the above embodiment, and for the sake of brevity, description thereof will be omitted here.

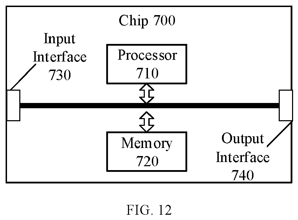

FIG. 12 is a schematic diagram showing a structure of a chip according to an embodiment of the present disclosure. The chip 700 shown in FIG. 12 includes a processor 710, and the processor 710 can invoke and execute a computer program from a memory to implement the method in the embodiment of the present disclosure.

Optionally, as shown in FIG. 12, the chip 700 may further include a memory 720. The processor 710 can invoke and execute a computer program from the memory 720 to implement the method in the embodiment of the present disclosure.

The memory 720 may be a separate device independent from the processor 710, or may be integrated in the processor 710.

Optionally, the chip 700 may further include an input interface 730. The processor 710 can control the input interface 730 to communicate with other devices or chips, and in particular, obtain information or data transmitted by other devices or chips.

Optionally, the chip 700 may further include an output interface 740. The processor 710 can control the output interface 740 to communicate with other devices or chips, and in particular, output information or data to other devices or chips.

Optionally, the chip can be applied to the network device in the embodiment of the present disclosure, and the chip can implement the corresponding processes implemented by the network device in the various methods of the embodiments of the present disclosure. For the sake of brevity, details thereof will be omitted here.

Optionally, the chip can be applied to the first or second device in the embodiment of the present disclosure, and the chip can implement the corresponding processes implemented by the first or second device in the various methods of the embodiments of the present disclosure. For the sake of brevity, details thereof will be omitted here.

Optionally, the chip in the embodiment of the present disclosure may be a system-level chip, a system-chip, a chip system, or a system-on-chip.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A wireless communication method, comprising:
transmitting, by a first device, a first Hybrid Automatic Repeat reQuest Acknowledgement (HARQ-ACK) codebook to a second device over a first feedback resource, the first HARQ-ACK codebook being determined according to a first control information format,
wherein the first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

2. The method according to claim 1, further comprising:
receiving, by the first device, first control information transmitted by the second device, the first control information corresponding to the first control information format, and the first control information being used to schedule or activate transmission of S physical channels, where S is greater than or equal to 1 and smaller than or equal to M, and the first HARQ-ACK codebook comprises HARQ-ACK information corresponding to at least one of the S physical channels.

3. The method according to claim 2, wherein the first feedback resource is a feedback resource in a feedback time slot, and the feedback time slot is determined according to a time slot corresponding to the last one of the S physical channels, or the feedback time slot is determined according to a time slot corresponding to the first one of the S physical channels.

4. The method according to claim 2 or 3, wherein when S is greater than or equal to 2, different ones of the S physical channels are used to transmit different Transport Blocks (TBs).

5. The method according to any one of claims 1 to 4, wherein the first HARQ-ACK codebook has a size determined according to M.

6. The method according to any one of claims 1 to 5, wherein the first HARQ-ACK codebook corresponds to a first candidate physical channel reception opportunity group, and the first candidate physical channel reception opportunity group corresponds to at least one target time slot.

7. The method according to any one of claims 1 to 6, wherein the first HARQ-ACK codebook corresponds to a first candidate physical channel reception opportunity group, and the first candidate physical channel reception opportunity group is determined according to M and/or S; and/or
a target time slot corresponding to the first candidate physical channel reception opportunity group is determined according to K1 in a HARQ feedback timing set and/or M.

8. The method according to claim 7, wherein the target time slots corresponding to the first candidate physical channel reception opportunity group comprise a union of target time slots determined according to K1 and M.

9. The method according to any one of claims 6 to 8, wherein a number of candidate physical channel reception opportunities corresponding to one target time slot is 1; or
the number of candidate physical channel reception opportunities corresponding to one target time slot is determined according to a Start and Length Indicator Value (SLIV) in a Time Domain Resource Assignment (TDRA) table.

10. The method according to claim 9, wherein a number of candidate physical channel reception opportunities corresponding to one target time slot is determined according to a SLIV in a Time Domain Resource Assignment (TDRA) table, and the SLIV is an SLIV corresponding to valid scheduling;
when all SLIVs in an i-th row in the TDRA table correspond to invalid scheduling, the i-th row is not used to determine any candidate physical channel reception opportunity, where i is a positive integer; or
when at least one SLIV in a j-th row in the TDRA table corresponds to invalid scheduling, the j-th row is not used to determine any candidate physical channel reception opportunity, where j is a positive integer.

11. The method according to any one of claims 1 to 10, wherein the first HARQ-ACK codebook comprises HARQ-ACK information corresponding to a first candidate physical channel reception opportunity group, and a position of HARQ-ACK information corresponding to at least one of S physical channels in the first HARQ-ACK codebook corresponds to a position of the at least one of the S physical channels in the first candidate physical channel reception opportunity group.

12. The method according to any one of claims 1 to 11, further comprising:
receiving, by the first device, second control information transmitted by the second device, the second control information being used to release a first semi-persistent scheduling physical channel configuration corresponding to a plurality of semi-persistent scheduling physical channel receptions, the first HARQ-ACK codebook comprising HARQ-ACK information corresponding to the second control information, and a position of the HARQ-ACK information corresponding to the second control information in the first HARQ-ACK codebook being a position of at least one of the plurality of semi-persistent scheduling physical channel receptions in the first HARQ-ACK codebook.

13. The method according to claim 12, wherein the position of the HARQ-ACK information corresponding to the second control information in the first HARQ-ACK codebook is a position of the first one of the plurality of semi-persistent scheduling physical channel receptions in the first HARQ-ACK codebook; or
the position of the HARQ-ACK information corresponding to the second control information in the first HARQ-ACK codebook is a position of the last one of the plurality of semi-persistent scheduling physical channel receptions in the first HARQ-ACK codebook; or
the position of the HARQ-ACK information corresponding to the second control information in the first HARQ-ACK codebook is a position of each of the plurality of semi-persistent scheduling physical channel receptions in the first HARQ-ACK codebook.

14. The method according to any one of claims 1 to 11, further comprising:
receiving, by the first device, third control information transmitted by the second device, the third control information being used to release a plurality of semi-persistent scheduling physical channel configurations, the first semi-persistent scheduling physical channel configuration of the plurality of semi-persistent scheduling physical channel configurations corresponding to a plurality of semi-persistent scheduling physical channel receptions, the first HARQ-ACK codebook comprising HARQ-ACK information corresponding to the third control information, and a position of the HARQ-ACK information corresponding to the third control information in the first HARQ-ACK codebook being a position of at least one of the plurality of semi-persistent scheduling physical channel receptions corresponding to the first semi-persistent scheduling physical channel configuration in the first HARQ-ACK codebook, wherein the first semi-persistent scheduling physical channel configuration is a semi-persistent scheduling physical channel configuration with a smallest configuration index among the plurality of semi-persistent scheduling physical channel configurations.

15. The method according to claim 14, wherein the position of the HARQ-ACK information corresponding to the third control information in the first HARQ-ACK codebook is a position of the first one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook is a position of the last one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook includes a position of each of the plurality of semi-persistent scheduling physical channel receptions corresponding to the first semi-persistent scheduling physical channel configuration in the first HARQ-ACK codebook.

16. The method according to any one of claims 12 to 15, wherein different ones of the plurality of semi-persistent scheduling physical channel receptions are used to transmit different Transport Block (TBs).

17. The method according to any one of claims 1 to 16, wherein the first device comprises a terminal device, and the second device comprises a network device; or
the first device comprises a first terminal device, and the second device comprises a second terminal device.

18. A wireless communication method, comprising:
determining, by a first device, a first feedback resource corresponding to a first candidate physical channel reception opportunity group;
determining, by the first device, that in the first candidate physical channel reception opportunity group, only Hybrid Automatic Repeat reQuest Acknowledgement (HARQ-ACK) information corresponding to one physical channel needs to be fed back, or only HARQ-ACK information corresponding to semi-persistent scheduling physical channel receptions needs to be fed back, or only HARQ-ACK information corresponding to control information for releasing one or more semi-persistent scheduling physical channel configurations needs to be fed back;
feeding, by the first device in response to determining that only the HARQ-ACK information corresponding to one physical channel needs to be fed back, back only the HARQ-ACK information corresponding to the physical channel over first feedback resource; or
feeding, by the first device in response to determining only the HARQ-ACK information corresponding to the semi-persistent scheduling physical channel receptions needs to be fed back, back only the HARQ-ACK information corresponding to the semi-persistent scheduling physical channel receptions over the first feedback resource; or
feeding, by the first device in response to determining that only the HARQ-ACK information corresponding to the control information for releasing the one or more semi-persistent scheduling physical channel configurations needs to be fed back, back only the HARQ-ACK information corresponding to the control information over the first feedback resource.

19. The method according to claim 18, wherein said determining, by the first device, that in the first candidate physical channel reception opportunity group, only the HARQ-ACK information corresponding to one physical channel needs to be fed back, or only the HARQ-ACK information corresponding to the semi-persistent scheduling physical channel receptions needs to be fed back, or only the HARQ-ACK information corresponding to the control information for releasing the one or more semi-persistent scheduling physical channel configurations needs to be fed back comprises:
determining, by the first device, that in the first candidate physical channel reception opportunity group, only the HARQ-ACK information corresponding to one physical channel needs to be fed back, or only the HARQ-ACK information corresponding to the semi-persistent scheduling physical channel receptions needs to be fed back, or only the HARQ-ACK information corresponding to the control information for releasing the one or more semi-persistent scheduling physical channel configurations needs to be fed back according to at least one of scheduling counter information, M, or a Time Domain Resource Assignment (TDRA) table,
where M represents a maximum number of physical channels allowable to be scheduled by a first control information format, or M represents a maximum number of time slots occupied by physical channels allowable to be scheduled by the first control information format, and
the first control information format is a control information format configured for the first device, and the TDRA table is a TDRA table corresponding to the first control information format.

20. The method according to claim 19, wherein the first device determines that only the HARQ-ACK information corresponding to one physical channel needs to be fed back in the first candidate physical channel reception opportunity group according to first control information, the first control information corresponding to the first control information format, the first control information being used to schedule one physical channel transmission, and the scheduling counter information in the first control information indicates 1.

21. The method according to claim 19 or 20, further comprising, when it is determined that only the HARQ-ACK information corresponding to the semi-persistent scheduling physical channel reception needs to be fed back:
determining, by the first device, an order of HARQ-ACK information corresponding to semi-persistent scheduling physical channel receptions corresponding to semi-persistent scheduling physical channel configurations that need to be fed back, according to at least one of a number of semi-persistent scheduling physical channel configurations that need to be fed back, a number of semi-persistent scheduling physical channel receptions corresponding to the semi-persistent scheduling physical channel configurations that need to be fed back, configuration indices corresponding to the semi-persistent scheduling physical channel configurations that need to be fed back, or cell indices corresponding to the semi-persistent scheduling physical channel configurations that need to be fed back.

22. The method according to claim 18, 19, or 21, wherein when it is determined that only the HARQ-ACK information corresponding to the semi-persistent scheduling physical channel receptions needs to be fed back, an order of the HARQ-ACK information corresponding to the semi-persistent scheduling physical channel receptions that need to be fed back comprises:
when there is one semi-persistent scheduling physical channel configuration that needs to be fed back, the semi-persistent scheduling physical channel configuration corresponds to a plurality of semi-persistent scheduling physical channel receptions, and the order of the HARQ-ACK information corresponding to the plurality of semi-persistent scheduling physical channel receptions is a chronological order of the plurality of semi-persistent scheduling physical channel receptions in time domain.

23. The method according to claim 18, 19 or 21, wherein when it is determined that only the HARQ-ACK information corresponding to the semi-persistent scheduling physical channel receptions needs to be fed back, an order of the HARQ-ACK information corresponding to the semi-persistent scheduling physical channel receptions that need to be fed back comprises:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations;
for a same cell index, an ascending order of configuration indices corresponding to the semi-persistent scheduling physical channel configurations; and
for a same configuration index, a chronological order of the semi-persistent scheduling physical channel receptions in time domain.

24. The method according to claim 18, 19 or 21, wherein when it is determined that only the HARQ-ACK information corresponding to the semi-persistent scheduling physical channel receptions needs to be fed back, an order of the HARQ-ACK information corresponding to the semi-persistent scheduling physical channel receptions that need to be fed back comprises:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations; and
for a same cell index, a chronological order of the semi-persistent scheduling physical channel receptions in time domain.

25. The method according to any one of claims 18 to 24, wherein when one semi-persistent scheduling physical channel configuration corresponds to a plurality of semi-persistent scheduling physical channel receptions, different ones of the plurality of semi-persistent scheduling physical channel receptions are used to transmit different Transport Blocks (TBs).

26. A wireless communication method, comprising:
receiving, by a second device, a first Hybrid Automatic Repeat reQuest Acknowledgement (HARQ-ACK) codebook transmitted by a first device over first feedback resource, the first HARQ-ACK codebook being determined according to a first control information format,
wherein the first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

27. The method according to claim 26, further comprising:
transmitting, by the second device, first control information to the first device, the first control information corresponding to the first control information format, and the first control information being used to schedule or activate transmission of S physical channels, where S is greater than or equal to 1 and smaller than or equal to M, and the first HARQ-ACK codebook comprises HARQ-ACK information corresponding to at least one of the S physical channels.

28. The method according to claim 27, wherein the first feedback resource is a feedback resource in a feedback time slot, and the feedback time slot is determined according to a time slot corresponding to the last one of the S physical channels, or the feedback time slot is determined according to a time slot corresponding to the first one of the S physical channels.

29. The method according to claim 27 or 28, wherein when S is greater than or equal to 2, different ones of the S physical channels are used to transmit different Transport Blocks (TBs); and/or
the first HARQ-ACK codebook has a size determined according to M.

30. The method according to any one of claims 26 to 29, wherein the first HARQ-ACK codebook corresponds to a first candidate physical channel reception opportunity group, and the first candidate physical channel reception opportunity group corresponds to at least one target time slot.

31. The method according to any one of claims 26 to 30, wherein the first HARQ-ACK codebook corresponds to a first candidate physical channel reception opportunity group, and the first candidate physical channel reception opportunity group is determined according to M and/or S; and/or
a target time slot corresponding to the first candidate physical channel reception opportunity group is determined according to K1 in a HARQ feedback timing set and/or M.

32. The method according to claim 31, wherein the target time slots corresponding to the first candidate physical channel reception opportunity group comprise a union of target time slots determined according to K1 and M.

33. The method according to any one of claims 30 to 32, wherein a number of candidate physical channel reception opportunities corresponding to one target time slot is 1; or
the number of candidate physical channel reception opportunities corresponding to one target time slot is determined according to a Start and Length Indicator Value (SLIV) in a Time Domain Resource Assignment (TDRA) table.

34. The method according to claim 33, wherein a number of candidate physical channel reception opportunities corresponding to one target time slot is determined according to a SLIV in a Time Domain Resource Assignment (TDRA) table, and the SLIV is an SLIV corresponding to valid scheduling;
wherein when all SLIVs in an i-th row in the TDRA table correspond to invalid scheduling, the i-th row is not used to determine any candidate physical channel reception opportunity, where i is a positive integer; or
when at least one SLIV in a j-th row in the TDRA table corresponds to invalid scheduling, the j-th row is not used to determine any candidate physical channel reception opportunity, where j is a positive integer.

35. The method according to any one of claims 26 to 34, wherein the first HARQ-ACK codebook comprises HARQ-ACK information corresponding to a first candidate physical channel reception opportunity group, and a position of HARQ-ACK information corresponding to at least one of S physical channels in the first HARQ-ACK codebook corresponds to a position of the at least one of the S physical channels in the first candidate physical channel reception opportunity group.

36. The method according to any one of claims 26 to 35, further comprising:
transmitting, by the second device, second control information to the first device, the second control information being used to release a first semi-persistent scheduling physical channel configuration corresponding to a plurality of semi-persistent scheduling physical channel receptions, the first HARQ-ACK codebook comprising HARQ-ACK information corresponding to the second control information, and a position of the HARQ-ACK information corresponding to the second control information in the first HARQ-ACK codebook being a position of at least one of the plurality of semi-persistent scheduling physical channel receptions in the first HARQ-ACK codebook.

37. The method according to claim 36, wherein the position of the HARQ-ACK information corresponding to the second control information in the first HARQ-ACK codebook is a position of the first one of the plurality of semi-persistent scheduling physical channel receptions in the first HARQ-ACK codebook; or
the position of the HARQ-ACK information corresponding to the second control information in the first HARQ-ACK codebook is a position of the last one of the plurality of semi-persistent scheduling physical channel receptions in the first HARQ-ACK codebook; or
the position of the HARQ-ACK information corresponding to the second control information in the first HARQ-ACK codebook is a position of each of the plurality of semi-persistent scheduling physical channel receptions in the first HARQ-ACK codebook.

38. The method according to any one of claims 26 to 35, further comprising:
transmitting, by the second device, third control information to the first device, the third control information being used to release a plurality of semi-persistent scheduling physical channel configurations, the first semi-persistent scheduling physical channel configuration of the plurality of semi-persistent scheduling physical channel configurations corresponding to a plurality of semi-persistent scheduling physical channel receptions, the first HARQ-ACK codebook comprising HARQ-ACK information corresponding to the third control information, and a position of the HARQ-ACK information corresponding to the third control information in the first HARQ-ACK codebook being a position of at least one of the plurality of semi-persistent scheduling physical channel receptions corresponding to the first semi-persistent scheduling physical channel configuration in the first HARQ-ACK codebook, wherein the first semi-persistent scheduling physical channel configuration is a semi-persistent scheduling physical channel configuration with a smallest configuration index among the plurality of semi-persistent scheduling physical channel configurations.

39. The method according to claim 38, wherein the position of the HARQ-ACK information corresponding to the third control information in the first HARQ-ACK codebook is a position of the first one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook is a position of the last one of the plurality of semi-persistent scheduling physical channel receptions corresponding to the first semi-persistent scheduling physical channel configuration in the first HARQ-ACK codebook; or
the position of the HARQ-ACK information corresponding to the third control information in the first HARQ-ACK codebook includes a position of each of the plurality of semi-persistent scheduling physical channel receptions corresponding to the first semi-persistent scheduling physical channel configuration in the first HARQ-ACK codebook.

40. The method according to any one of claims 36 to 39, wherein different ones of the plurality of semi-persistent scheduling physical channel receptions are used to transmit different Transport Block (TBs).

41. The method according to any one of claims 26 to 40, wherein the first device comprises a terminal device, and the second device comprises a network device; or
the first device comprises a first terminal device, and the second device comprises a second terminal device.

42. A wireless communication method, comprising:
determining, by a second device, a first feedback resource corresponding to a first candidate physical channel reception opportunity group, the first candidate physical channel access opportunity group comprising only one physical channel, or only semi-persistent scheduling physical channel receptions, or only control information for releasing one or more semi-persistent scheduling physical channel configurations; and
receiving, by the second device, feedback information transmitted by a first device over the first feedback resource, the feedback information comprising only Hybrid Automatic Repeat reQuest Acknowledgement (HARQ-ACK) information corresponding to the physical channel, or only HARQ-ACK information corresponding to the semi-persistent scheduling physical channel receptions, or only HARQ-ACK information corresponding to the control information.

43. The method according to claim 42, wherein the first candidate physical channel access opportunity group comprising only one physical channel, or only the semi-persistent scheduling physical channel receptions, or only the control information for releasing the one or more semi-persistent scheduling physical channel configurations is determined according to at least one of scheduling counter information, M, or a Time Domain Resource Assignment (TDRA) table,
where M represents a maximum number of physical channels allowable to be scheduled by a first control information format, or M represents a maximum number of time slots occupied by physical channels allowable to be scheduled by the first control information format, and
the first control information format is a control information format configured for the first device, and the TDRA table is a TDRA table corresponding to the first control information format.

44. The method according to claim 43, wherein the first candidate physical channel access opportunity group comprising only one physical channel is determined according to first control information, the first control information corresponding to the first control information format, the first control information being used to schedule one physical channel transmission, and the scheduling counter information in the first control information indicates 1.

45. The method according to claim 42 or 43, wherein when it is determined that the feedback information comprises only the HARQ-ACK information corresponding to the semi-persistent scheduling physical channel receptions, an order of the HARQ-ACK information corresponding to the semi-persistent scheduling physical channel receptions comprises:
when there is one semi-persistent scheduling physical channel configuration, the semi-persistent scheduling physical channel configuration corresponds to a plurality of semi-persistent scheduling physical channel receptions, and the order of the HARQ-ACK information corresponding to the plurality of semi-persistent scheduling physical channel receptions is a chronological order of the plurality of semi-persistent scheduling physical channel receptions in time domain.

46. The method according to claim 42 or 43, wherein when it is determined that the feedback information comprises only the HARQ-ACK information corresponding to the semi-persistent scheduling physical channel receptions, an order of the HARQ-ACK information corresponding to the semi-persistent scheduling physical channel receptions comprises:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations;
for a same cell index, an ascending order of configuration indices corresponding to the semi-persistent scheduling physical channel configurations; and
for a same configuration index, a chronological order of the semi-persistent scheduling physical channel receptions in time domain.

47. The method according to claim 42 or 43, wherein when it is determined that the feedback information comprises only the HARQ-ACK information corresponding to the semi-persistent scheduling physical channel receptions, an order of the HARQ-ACK information corresponding to the semi-persistent scheduling physical channel receptions comprises:
when there are a plurality of semi-persistent scheduling physical channel configurations that need to be fed back, at least one of the plurality of semi-persistent scheduling physical channel configurations corresponds to a plurality of semi-persistent scheduling physical channel receptions, the order of the HARQ-ACK information corresponding to the semi-persistent scheduling physical channel receptions corresponding to the plurality of semi-persistent scheduling physical channel configurations is:
an ascending order of cell indices corresponding to the semi-persistent scheduling physical channel configurations; and
for a same cell index, a chronological order of the semi-persistent scheduling physical channel receptions in time domain.

48. The method according to any one of claims 42 to 47, wherein when one semi-persistent scheduling physical channel configuration corresponds to a plurality of semi-persistent scheduling physical channel receptions, different ones of the plurality of semi-persistent scheduling physical channel receptions are used to transmit different Transport Blocks (TBs).

49. A wireless communication device, comprising:
a communication unit configured to transmit a first Hybrid Automatic Repeat reQuest Acknowledgement (HARQ-ACK) codebook to a second device over a first feedback resource, the first HARQ-ACK codebook being determined according to a first control information format,
wherein the first control information format is a control information format configured for the device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

50. A wireless communication device, comprising:
a processing unit configured to:
determine a first feedback resource corresponding to a first candidate physical channel reception opportunity group; and
determine that in the first candidate physical channel reception opportunity group, only Hybrid Automatic Repeat reQuest Acknowledgement (HARQ-ACK) information corresponding to one physical channel needs to be fed back, or only HARQ-ACK information corresponding to semi-persistent scheduling physical channel receptions needs to be fed back, or only HARQ-ACK information corresponding to control information for releasing one or more semi-persistent scheduling physical channel configurations needs to be fed back; and
a communication unit configured to:
feed, in response to determining that only the HARQ-ACK information corresponding to one physical channel needs to be fed back, back only the HARQ-ACK information corresponding to the physical channel over the first feedback resource; or
feed, in response to determining only the HARQ-ACK information corresponding to the semi-persistent scheduling physical channel receptions needs to be fed back, back only the HARQ-ACK information corresponding to the semi-persistent scheduling physical channel receptions over the first feedback resource; or
feed, in response to determining that only the HARQ-ACK information corresponding to the control information for releasing the one or more semi-persistent scheduling physical channel configurations needs to be fed back, back only the HARQ-ACK information corresponding to the control information over the first feedback resource.

51. A wireless communication device, comprising:
a communication unit configured to receive a first Hybrid Automatic Repeat reQuest Acknowledgement (HARQ-ACK) codebook transmitted by a first device over a first feedback resource, the first HARQ-ACK codebook being determined according to a first control information format,
wherein the first control information format is a control information format configured for the first device, and a maximum number of physical channels allowable to be scheduled or activated by the first control information format is M, or a maximum number of time slots occupied by physical channels allowable to be scheduled or activated by the first control information format is M, where M is a positive integer greater than or equal to 2.

52. A wireless communication device, comprising:
a processing unit configured to determine a first feedback resource corresponding to a first candidate physical channel reception opportunity group, the first candidate physical channel access opportunity group comprising only one physical channel, or only semi-persistent scheduling physical channel receptions, or only control information for releasing one or more semi-persistent scheduling physical channel configurations; and
a communication unit configured to receive feedback information transmitted by a first device over the first feedback resource, the feedback information comprising only Hybrid Automatic Repeat reQuest Acknowledgement (HARQ-ACK) information corresponding to the physical channel, or only HARQ-ACK information corresponding to the semi-persistent scheduling physical channel receptions, or only HARQ-ACK information corresponding to the control information.

53. A communication device, comprising a processor and a memory, wherein the memory has a computer program stored thereon, and the processor is configured to invoke and execute the computer program stored in the memory to perform the method according to any of claims 1 to 17 or the method according to any of claims 18 to 25.

54. A communication device, comprising a processor and a memory, wherein the memory has a computer program stored thereon, and the processor is configured to invoke and execute the computer program stored in the memory to perform the method according to any of claims 26 to 41 or the method according to any of claims 42 to 48.

55. A chip, comprising a processor configured to invoke and execute a computer program from a memory, to cause a device provided with the chip to perform the method according to any of claims 1 to 17 or the method according to any of claims 18 to 25.

56. A computer-readable storage medium, storing a computer program that causes a computer to perform the method according to any of claims 1 to 17 or the method according to any of claims 18 to 25.

57. A computer program product, comprising computer program instructions that cause a computer to perform the method according to any of claims 1 to 17 or the method according to any of claims 18 to 25.

58. A computer program, causing a computer to perform the method according to any of claims 1 to 17 or the method according to any of claims 18 to 25.

59. A chip, comprising a processor configured to invoke and execute a computer program from a memory, to cause a device provided with the chip to perform the method according to any of claims 26 to 41 or the method according to any of claims 42 to 48.

60. A computer-readable storage medium, storing a computer program that causes a computer to perform the method according to any of claims 26 to 41 or the method according to any of claims 42 to 48.

61. A computer program product, comprising computer program instructions that cause a computer to perform the method according to any of claims 26 to 41 or the method according to any of claims 42 to 48.

62. A computer program, causing a computer to perform the method according to any of claims 26 to 41 or the method according to any of claims 42 to 48.
